# EUROPEAN PATENT APPLICATION

(11) **EP 4 650 957 A1**
(43) Date of publication of application: **19.11.2025**
(21) Application number: 24830619.3
(22) Date of filing: 20.06.2024
(51) Int. Cl.: G06F 9/451, G06F 3/01, G06F 3/04883, G06V 40/16

(54) **DISPLAY METHOD, ELECTRONIC DEVICE, AND COMPUTER STORAGE MEDIUM**

(30) Priority: 28.06.2023 CN 202310780790; 14.03.2024 CN 202410295539
(71) Applicant: Huawei Technologies Co., Ltd., Shenzhen, Guangdong 518129 (CN)
(72) Inventor: WANG, Xiaomei, Shenzhen, Guangdong 518129 (CN); NING, Rui, Shenzhen, Guangdong 518129 (CN); WU, Xian, Shenzhen, Guangdong 518129 (CN); LIU, Xuezhi, Shenzhen, Guangdong 518129 (CN); SHEN, Zhibo, Shenzhen, Guangdong 518129 (CN); CHEN, Li, Shenzhen, Guangdong 518129 (CN)
(74) Representative: MERH-IP Matias Erny Reichl Hoffmann Patentanwälte PartG mbB
(86) International application number: PCT/CN2024/100484
(87) International publication number: WO 2025/001973

(57) **Abstract**

This application discloses a display method, an electronic device, and a computer storage medium. The method includes: displaying a first interface, where the first interface includes a first image in a first display manner; detecting that a state of a first user changes from a first state to a second state, where the state of the first user includes at least one of the following: an angle of a head of the user relative to the electronic device, a position of a face of the user relative to the electronic device, a gesture action, a facial expression, a position at which a line of sight is focused on a display, and an appearance feature; and updating a display manner of the first image to a second display manner, where the first display manner is related to the first state, and the second display manner is related to the second state. In this application, a display manner of an image changes with a user state. This can enhance the appeal of a display function to a user, and increase usage duration.

## Description

This application claims priorities to Chinese Patent Application No. 202310780790.9, filed with the China National Intellectual Property Administration on June 28, 2023 and entitled "ALWAYS ON DISPLAY METHOD, ELECTRONIC DEVICE, AND COMPUTER STORAGE MEDIUM", and to Chinese Patent Application No. 202410295539.8, filed with the China National Intellectual Property Administration on March 14, 2024 and entitled "DISPLAY METHOD, ELECTRONIC DEVICE, AND COMPUTER STORAGE MEDIUM", both of which are incorporated herein by reference in their entireties.

### TECHNICAL FIELD

This application relates to the field of human-computer interaction technologies, and in particular, to a display method, an electronic device, and a computer storage medium.

### BACKGROUND

Currently, a terminal may have an always on display (always on display, AOD) function, for example, displaying content such as a background, time, a fingerprint icon, and a notification message after a screen of the terminal is locked. The background is usually an image selected by a user or an image preset by a system. The user usually uses the AOD function to view only information such as the time and the notification message, and exits the AOD function (for example, switches to screen-off or -on states) immediately after accessing the information. Due to its brief usage duration and limited appeal to the user, usability of the AOD function remains relatively low.

### SUMMARY

This application discloses a display method, an electronic device, and a computer storage medium, to enhance the appeal of a display function like an always on display function to a user, and increase usage duration, so as to improve usability of the display function.

According to a first aspect, this application provides a display method, applied to an electronic device, where the electronic device includes a display, and the method includes: displaying a first interface, where the first interface includes a first image (for example, a wallpaper image) in a first display manner; detecting that a state of a first user changes from a first state to a second state, where the state of the first user includes at least one of the following: an angle of a head of the user relative to the electronic device, a position of a face of the user relative to the electronic device, a gesture action, a facial expression, a position at which a line of sight is focused on the display, and an appearance feature; and updating a display manner of the first image to a second display manner (for example, a static display manner or a dynamic display manner), where the first display manner is related to the first state, and the second display manner is related to the second state.

In some examples, the first interface is an always on display AOD interface, and the first image is a wallpaper image of the AOD interface. In some other examples, the first interface is a lock screen, and the first image is a wallpaper image of the lock screen. In some other examples, the first interface is a home screen, and the first image is a wallpaper image of the home screen.

In the foregoing method, the display manner of the first image on the first interface may change with the state of the first user, and the user has various states. In other words, the user may change the state (the state may be of different types) of the user a plurality of times randomly, so that the first image displayed by an electronic device 100 changes. In this way, an image display function (for example, a wallpaper display function) is provided with a playability/new feature, instead of being used only to display limited information such as time. This effectively enhances the appeal of the image display function to the user, and attracts the user to spend more time in using the image display function, to improve usability of the image display function.

In a possible implementation, the first image includes a first virtual object, and the first virtual object is a virtual person, a virtual animal, or a virtual entity.

For example, the display manner of the first image includes a display manner of the first virtual object. A display manner of the first virtual object in the first image in the first display manner is related to the first state, and a display manner of the first virtual object in the first image in the second display manner is related to the second state.

For example, the first virtual object is an animation image.

In the foregoing method, the first image includes the first virtual object, and the display manner of the first virtual object may change with the state of the first user. As the user more intuitively perceives a change of the first image based on the change of the first virtual object, the user has a visual sense that "the first virtual object is a virtual image of the user, and the virtual image of the user changes when the user changes". This further enhances the appeal of the image display function to the user, to further improve usability of the image display function.

In a possible implementation, the first image includes at least one piece of image content, the at least one piece of image content includes image content of the first virtual object, and the display manner of the first image includes at least one of the following: a position of the image content, a size of the image content, whether the image content is in a hidden state, a color of the image content, a shape of the image content, brightness of the image content, an expression of the first virtual object, a gesture action of the first virtual object, and an appearance feature of the first virtual object.

In the foregoing method, the changeable first image has various display manners. For example, the display manner is not limited to the position and the size of image content, and may further include content similar to a user state, such as the expression of the first virtual object. Therefore, when the display manner of the first image changes, a richer, hierarchical, and intuitive display effect can be provided for the user, that is, a better display effect can be provided for the user, thereby improving user experience.

In a possible implementation, detecting that the state of the first user changes from the first state to the second state includes: when the head of the first user rotates relative to the electronic device in a first direction, or the electronic device rotates relative to the first user in a second direction, detecting that the angle of the head of the first user relative to the electronic device changes from a first angle to a second angle, where the first direction is opposite to the second direction; and updating the display manner of the first image to the second display manner includes: updating the first virtual object or a first part of the first virtual object from a first position to a second position, where the first position is related to the first angle, the second position is related to the second angle, and the second position is located in the first direction of the first position.

In the foregoing method, the first user may rotate the head in the first direction, or control the electronic device to rotate in the second direction, so that a position of the first virtual object or a position of the first part of the first virtual object changes in the first direction. A rotation direction of the first user relative to the electronic device is consistent with a change direction of the first virtual object or the first part, and a change effect is interesting and more intuitive, so that user experience is further improved.

In a possible implementation, detecting that the state of the first user changes from the first state to the second state includes: when the face of the first user translates relative to the electronic device in a third direction, or the electronic device translates relative to the first user in a fourth direction, detecting that the position of the face of the first user relative to the electronic device changes from a third position to a fourth position, where the third direction is opposite to the fourth direction, and the fourth position is located in the third direction of the third position; and updating the display manner of the first image to the second display manner includes: updating the first virtual object or a first part of the first virtual object from a fifth position to a sixth position, where the fifth position is related to the third position, the sixth position is related to the fourth position, and the sixth position is located in the third direction of the fifth position.

In the foregoing method, the first user may translate the face in the third direction, or control the electronic device to translate in the fourth direction, so that a position of the first virtual object or a position of the first part of the first virtual object changes in the third direction. A translation direction of the first user relative to the electronic device is consistent with a change direction of the first virtual object or the first part, and a change effect is interesting and more intuitive, so that user experience is further improved.

In a possible implementation, detecting that the state of the first user changes from the first state to the second state includes: detecting that an expression of the first user changes from a first expression to a second expression, where an expression of the first virtual object in the first image in the first display manner is the first expression, and an expression of the first virtual object in the first image in the second display manner is the second expression.

In the foregoing method, the expression of the first virtual object is consistent with the expression of the first user. When the expression of the first user changes, the expression of the first virtual object also changes accordingly. A change effect is interesting and more intuitive, so user experience is further improved.

In a possible implementation, the second state includes that the gesture action of the first user is a first gesture, the first virtual object in the first image in the first display manner is in a hidden state, and the first virtual object in the first image in the second display manner is in a display state; or the first virtual object in the first image in the first display manner is in a display state, and the first virtual object in the first image in the second display manner is in a hidden state.

In some examples, updating the display manner of the first image to the second display manner includes: changing the first virtual object from a hidden state to a displayed state, where display content of the first virtual object gradually increases.

In some examples, updating the display manner of the first image to the second display manner includes: changing the first virtual object from a display state to a hidden state, where display content of the first virtual object gradually decreases.

In the foregoing method, the user may perform the first gesture to control the first virtual object to "appear" or "disappear", to give the user a feeling that "the first virtual object comes and goes immediately". In this way, playability of the image display function is further improved, so that user experience is improved.

In a possible implementation, detecting that the state of the first user changes from the first state to the second state includes: detecting that the position at which the line of sight of the first user is focused on the display changes from a seventh position to an eighth position, where the first virtual object in the first image in the first display manner is located at the seventh position, and the first virtual object in the first image in the second display manner is located at the eighth position.

In the foregoing method, a display position of the first virtual object is the position at which the line of sight of the first user is focused on the display. The first user may control, by changing the position at which the line of sight is focused on the display, the first virtual object to change the display position, to further improve playability of the image display function, so that user experience is improved.

In a possible implementation, the first state includes a ninth position at which the line of sight of the first user is focused on the display, the second state includes a tenth position at which the line of sight of the first user is focused on the display, the first virtual object in the first image is located at the tenth position, a display state of the first virtual object in the first image in the first display manner is different from a display state of the first virtual object in the first image in the second display manner, and the display state includes at least one of the following: a size, a color, a shape, and brightness.

In the foregoing method, the display state of the first virtual object is related to whether the first user gazes at the first virtual object. For example, the first virtual object is a light bulb, when the first user does not gaze at the first virtual object, the first virtual object is in a screen-off state (that is, the first virtual object is in the screen-off state in the first image in the first display manner). When the first user gazes at the first virtual object, the first virtual object is in a power status (that is, the first virtual object is in a screen-on state in the first image in the second display manner), and the first user may control the display state of the first virtual object by changing the position at which the line of sight is focused on the display. In this way, playability of the image display function is further improved, so that user experience is improved.

In a possible implementation, detecting that the state of the first user changes from the first state to the second state includes: detecting that the position at which the line of sight of the first user is focused moves in a fifth direction; and updating the display manner of the first image to the second display manner includes: updating the first virtual object or a first part of the first virtual object from an eleventh position to a twelfth position, where the twelfth position is located in the fifth direction of the eleventh position.

In the foregoing method, a change direction of the position of the first virtual object or the position of the first part is consistent with a change direction of the position at which the line of sight of the first user is focused, and the first user may control the change direction of the position of the first virtual object or the position of the first part by moving the position at which the line of sight is focused. This further improves playability of the image display function, so that user experience is improved.

In a possible implementation, the first state includes that the appearance feature of the first user is a first feature; the second state includes that the appearance feature of the first user is a second feature; and an appearance feature of the first virtual object in the first image in the first display manner matches the first feature, an appearance feature of the first virtual object in the first image in the second display manner matches the second feature, and the appearance feature includes at least one of the following: clothing, an accessory, a hairstyle, and a facial feature.

In the foregoing method, the appearance feature of the first virtual object is consistent with the appearance feature of the first user. When the appearance feature of the first user changes, the appearance feature of the first virtual object also changes accordingly. A change effect is interesting and more intuitive, so user experience is further improved.

In a possible implementation, before displaying the first interface, the method further includes: displaying a first setting interface, where the first setting interface includes a plurality of images; and receiving a first operation for the first image in the plurality of images.

In the foregoing method, the first image may be selected by the user from the plurality of images, and the user may select a favorite image as an image displayed on the first interface. The first image meets a user requirement, and user experience is further improved.

In a possible implementation, before displaying the first interface, the method further includes: sending a first request message to a network device, where the first request message includes information about a first account associated with the electronic device; receiving a second image sent by the network device, where the second image is an image of a second user of the first account; and obtaining the first image based on the second image, where the first virtual object in the first image is a virtual person, and the first virtual object is obtained based on the second user in the second image.

For example, the first account is determined by the electronic device in response to an operation of a user, that is, the first account is selected by the user.

In the foregoing method, the first image may be generated based on the image of the second user of the first account. For example, the first account is an account (for example, a family account) associated with an account of the first user. In this way, the first user can see and control that the changeable first virtual object is a virtual image of the second user related to the first user. This not only can meet a personalized requirement of the user, but also is more interesting, so that user experience is improved.

In a possible implementation, before displaying the first interface, the method further includes: receiving a third image uploaded by the first user; and obtaining the first image based on the third image, where the third image is the same as the first image; or the first virtual object in the first image is obtained based on an object in the third image.

In the foregoing method, the first image may be generated based on an image uploaded by the first user. For example, the first virtual object corresponds to an object in the image uploaded by the first user. This can meet a personalized requirement of the user, so that user experience is further improved.

In a possible implementation, before displaying the first interface, the method further includes: capturing a fourth image via a camera of the electronic device; and obtaining the first image based on the fourth image, where the first virtual object in the first image is obtained based on an object in the fourth image.

In the foregoing method, the first image may be generated based on an image captured by the electronic device in real time. For example, when different users use the electronic device, the electronic device may display different first virtual objects. For example, when a same user in different user states uses the electronic device, the electronic device may display different first virtual objects. The displayed first virtual object is closely related to the user image captured by the electronic device in real time, so that a more interesting and intuitive display effect is provided for the user, and user experience is further improved.

In a possible implementation, the second image is an image of the second user at first time, an appearance feature of the second user in the second image is a third feature, and the appearance feature of the first virtual object in the first image in the first display manner matches the third feature; and after displaying the first interface, the method further includes: sending a second request message to the network device; and receiving a fifth image sent by the network device, where the fifth image is an image of the second user at second time, the second time is later than the first time, and an appearance feature of the second user in the fifth image is a fourth feature; and updating the display manner of the first image to a third display manner, where an appearance feature of the first virtual object in the first image in the third display manner matches the fourth feature.

For example, the first time is at interval of one day with the second time.

In the foregoing method, after displaying the first interface, the electronic device may obtain, through the network device, a latest appearance feature of the second user of an associated account (namely, the first account), and update the first virtual object displayed based on the obtained appearance feature in real time, so that the first virtual object displayed by the electronic device matches the latest appearance feature of the second user. This provides a more interesting and intuitive display effect for the user, so that user experience is further improved.

In a possible implementation, updating the display manner of the first image to the second display manner includes: when the first image is an animation, switching a current playing point of the first image from a first point to a second point; or when the first image is an image including a plurality of layers, adjusting a display manner of at least one layer in the first image.

In the foregoing method, the changeable first image may be an animation or an image, and is not limited to the animation. In this way, even if the first image is an image, a display manner of the first image may be accordingly changed, so that an application scenario of the playable image display function provided in this application is expanded.

In a possible implementation, the method further includes: after displaying the first interface, controlling the display to be turned off when it is detected that the first user does not gaze on the display; or displaying the first interface when it is detected that the first user gazes on the display.

In the foregoing method, when the first user does not gaze on the display, the first display may be turned off. When the first user gazes on the display, the first display displays the first interface. This avoids unnecessary power consumption caused by still displaying the first interface when the first user does not gaze on the display, reduces device power consumption, and improves device usability.

In a possible implementation, the method further includes: after displaying the first interface, controlling the display to be turned off when it is detected that an object approaches the electronic device; and displaying the first interface when it is detected that the object leaves the electronic device.

In the foregoing method, when the object approaches, the first display may be turned off. When the object leaves, the first display displays the first interface. This avoids unnecessary power consumption due to a fact that the user does not view the first interface but the first interface is still displayed when the object approaches, reduces device power consumption, and improves device usability.

In a possible implementation, the method further includes: displaying a second setting interface, where the second setting interface is used to preview the first interface, and the second setting interface includes the first image in the first display manner; detecting that the state of the first user changes from the first state to the second state; and updating the display manner of the first image to the second display manner.

For example, the second setting interface is used to select or input the first image.

In the foregoing method, when viewing the second setting interface of the first interface, the user may preview, through the second setting interface, a process in which the display manner of the first image changes with the user state, so that it is more convenient for the user to select a favorite first image, and the user does not need to view the foregoing process on the first interface after selecting the first image. This reduces time and energy consumed by the user to select the first image, and further improves user experience.

In a possible implementation, displaying the second setting interface includes: receiving a second operation when displaying the first interface; and displaying the second setting interface in response to the second operation.

In the foregoing method, when the electronic device displays the first interface, the first user may quickly invoke the second setting interface of the first interface through the second operation, and does not need to switch the electronic device to a screen-on state and then perform a series of operations to invoke the second setting interface. This reduces user operations and further improves user experience.

In a possible implementation, the method further includes: displaying a second interface when first duration elapses after the first interface is displayed, where the second interface includes a sixth image, and the sixth image is different from the first image.

In the foregoing method, the electronic device may switch a display image (for example, a wallpaper image) at an interval of the first duration, so that the user experiences more changeable images, more diversified display effects are provided for the user, and user experience is further improved.

According to a second aspect, this application provides an electronic device, including a transceiver, a processor, and a memory. The memory is configured to store a computer program, and the processor invokes the computer program to perform the display method provided in any one of the first aspect and the implementations of the first aspect of this application.

According to a third aspect, this application provides a computer storage medium. The computer storage medium stores a computer program. When the computer program is executed by a processor, the display method provided in any one of the first aspect and the implementations of the first aspect of this application is implemented.

According to a fourth aspect, this application provides a computer program product. When the computer program product is run on an electronic device, the electronic device is enabled to perform the display method provided in any one of the first aspect of this application and the implementations of the first aspect.

According to a fifth aspect, this application provides an electronic device. The electronic device includes the method or apparatus for performing any aspect or implementation of this application. The electronic device is, for example, a chip.

It should be understood that descriptions of technical features, technical solutions, beneficial effects, or similar languages in this application do not imply that all features and advantages can be implemented in any single implementation. On the contrary, it may be understood that descriptions of features or beneficial effects mean that at least one implementation includes specific technical features, technical solutions, or beneficial effects. Therefore, descriptions of technical features, technical solutions, or beneficial effects in this application do not necessarily refer to a same implementation. Further, the technical features, the technical solutions, or the beneficial effects described in embodiments of this application may be combined in any proper manner. Persons skilled in the art may understand that this application may be implemented without one or more specific technical features or technical solutions, or beneficial effect in a specific implementation. In other implementations, additional technical features and beneficial effects may also be identified in a specific implementation that does not reflect all implementations.

### BRIEF DESCRIPTION OF DRAWINGS

The following describes the accompanying drawings used in this application.
FIG. 1 is a diagram of a hardware structure of an electronic device according to this application;
FIG. 2 is a diagram of a software architecture of an electronic device according to this application;
FIG. 3A to FIG. 3E are diagrams of some always on display AOD interfaces according to this application;
FIG. 4A to FIG. 4E are diagrams of some other AOD interfaces according to this application;
FIG. 5A to FIG. 5E are diagrams of some other AOD interfaces according to this application;
FIG. 6, FIG. 7, FIG. 8A, and FIG. 8B are diagrams of some other AOD interfaces according to this application;
FIG. 9A to FIG. 9D are diagrams of some other AOD interfaces according to this application;
FIG. 10A to FIG. 10C are diagrams of some setting interfaces according to this application;
FIG. 11A and FIG. 11B are diagrams of some other setting interfaces according to this application;
FIG. 12A is a diagram of another setting interface according to this application;
FIG. 12B is a diagram of another AOD interface according to this application;
FIG. 13A and FIG. 13B are diagrams of some other setting interfaces according to this application;
FIG. 14 is a diagram of another setting interface according to this application;
FIG. 15A and FIG. 15B are diagrams of some other AOD interfaces according to this application;
FIG. 16 is a diagram of another setting interface according to this application;
FIG. 17 is a schematic flowchart of a display method according to this application;
FIG. 18A and FIG. 18B are diagrams of some relationships between a change status of a user state and a display manner of a screen-off image according to this application;
FIG. 19A is a diagram of a lock screen according to this application; and
FIG. 19B is a diagram of a home screen according to this application.

### DESCRIPTION OF EMBODIMENTS

The following describes technical solutions of embodiments in this application with reference to the accompanying drawings. In descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

This application provides a display method, applied to an electronic device. An image (for example, a wallpaper image) displayed by the electronic device may change with a user state. The image may be an image displayed in an always on display (always on display, AOD) state (which may be referred to as a screen-off image for short), or may be an image displayed in a screen-locked state, or may be an image displayed on a home screen. For example, in the AOD state, when a face of a user rotates/moves, the screen-off image rotates/moves accordingly, so that playability of a display image like the screen-off image can be improved, and the appeal of a display function like an AOD function to the user can be enhanced. In this way, usage duration of the display function like the AOD function is increased, and usability of the display function like the AOD function is improved. For ease of description, the following embodiments are mainly described by using an AOD scenario (the screen-off image displayed by the electronic device changes with the user state) as an example. A screen-locked scenario and a home screen scenario are similar.

A display (which may also be understood as the electronic device) of the electronic device may include a screen-off state (which may also be referred to as a black screen state), an AOD state, and a screen-on state. In the screen-off state, the display is not turned on. In the AOD state, the electronic device may turn on some or all areas of the display to display limited information, for example, a background, time, a fingerprint icon, and a notification message. The background is, for example, the screen-off image. In the screen-on state, the electronic device may turn on all areas of the display to display interfaces such as a home screen and a user interface of an application. In an implementation, in the AOD state, the electronic device may be locked, and only some functions, for example, viewing the limited information, a camera, and a flashlight, may be used. The user may perform authentication on the locked electronic device by using information such as a password, a face, and a fingerprint, and after the authentication succeeds, the electronic device may be unlocked. After the electronic device is unlocked, all functions of the electronic device may be used. In an implementation, in the screen-on state, the electronic device is not locked.

The electronic device may switch between any two of the screen-off state, the AOD state, and the screen-on state. In some examples, the electronic device may switch from the screen-off state to the AOD state when receiving a user operation (for example, a touch operation for the display). In some other examples, when detecting that the user gazes on the display, the electronic device may switch from the screen-off state to the AOD state, which may also be referred to as eyes on display (eyes on display, EOD).

The screen-off image is a changeable image. In an implementation, the screen-off image is an image including a plurality of layers, and the screen-off image may be changed by adjusting at least one of the plurality of layers. In another implementation, the screen-off image is an animation, the animation may include a plurality of image frames, and the screen-off image may be changed by adjusting a currently displayed image frame (for example, switching from the first frame to the last frame). The animation includes, for example, but is not limited to, a format like a graphics interchange format (graphics interchange format, GIF), and an audio video interleave (audio video interleave, AVI) format.

The user state may include but is not limited to an angle of the head of the user (relative to the electronic device, where subsequent angles of the head of the user are all relative to the electronic device), a position of the face of the user (relative to the electronic device, where subsequent positions of the face of the user are all relative to the electronic device), a user expression, a user operation (for example, a touch operation or a gesture action), a line of sight of the user, an appearance feature (for example, clothing, an accessory, a facial feature, and a hairstyle), and the like.

For example, the rotation may be rotation around a preset central axis. For example, the movement may be translation.

In this application, the electronic device may be a mobile phone, a tablet computer, a handheld computer, a desktop computer, a laptop computer, an ultra-mobile personal computer (ultra-mobile personal computer, UMPC), a netbook, a cellular phone, a personal digital assistant (personal digital assistant, PDA), a smart home device like a smart television or a smart camera, a wearable device like a smart band, a smart watch, or smart glasses, an extended reality (extended reality, XR) device like an augmented reality (augmented reality, AR) device, a virtual reality (virtual reality, VR) device, or a mixed reality (mixed reality, MR) device, a vehicle-mounted device, or a smart city device. A specific type of the electronic device is not specially limited in embodiments of this application.

The following describes a structure of an example electronic device provided in embodiments of this application.

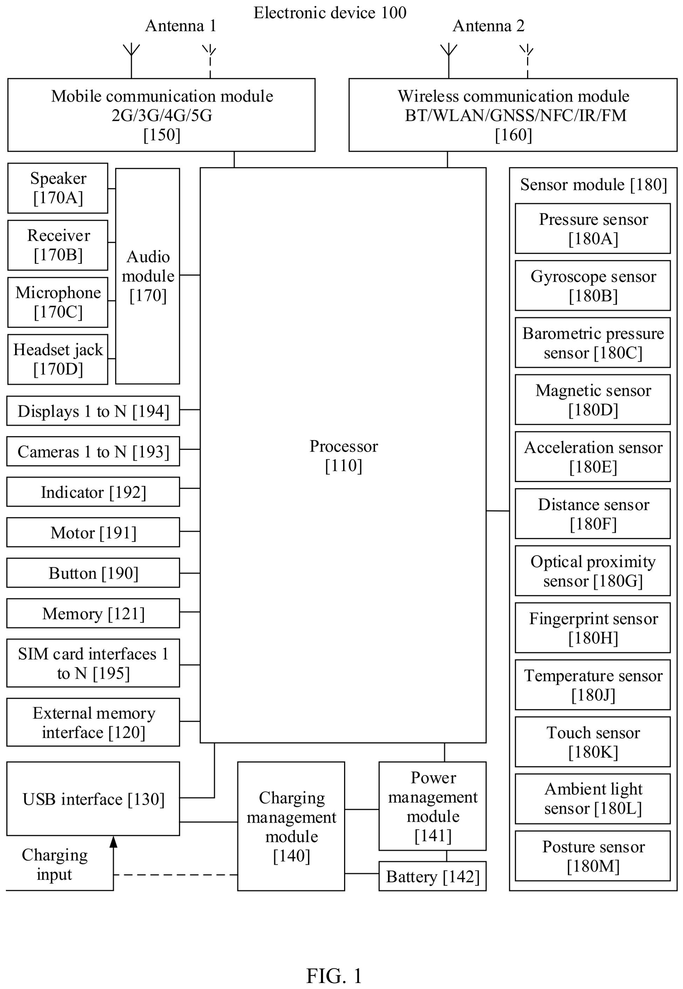

FIG. 1 is an example of a diagram of a hardware structure of an electronic device 100.

The electronic device 100 may include a processor 110, an external memory interface 120, a memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a posture sensor 180M, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In an implementation, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

The charging management module 140 is configured to receive a charging input from a charger. The power management module 141 is configured to connect to the battery 142, the charging management module 140, and the processor 110. The power management module 141 receives an input from the battery 142 and/or the charging management module 140, and supplies power to the processor 110, the memory 121, the display 194, the camera 193, the wireless communication module 160, and the like. The power management module 141 may be further configured to monitor parameters such as a battery capacity, a battery cycle count, and a battery health status (electric leakage or impedance). In another implementation, the power management module 141 may alternatively be disposed in the processor 110. In another implementation, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like. In an implementation, the electronic device 100 may be connected to and communicate with another electronic device by using a wireless communication function, and display a dynamic ring via a display of the another electronic device. In some examples, the another electronic device may be a wearable device, for example, but is not limited to a smart band, a smartwatch, or smart glasses. The wearable device displays the dynamic ring, so that the user can obtain event progress more conveniently, and efficiency of obtaining information by the user is further improved.

The antenna 1 and the antenna 2 are configured to: transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In another implementation, the antenna may be used in combination with a tuning switch.

The mobile communication module 150 may provide a wireless communication solution that is applied to the electronic device 100 and that includes a second-generation (second-generation, 2G) mobile communication technology/a third-generation (third-generation, 3G) mobile communication technology/a fourth-generation (fourth-generation, 4G) mobile communication technology/a fifth-generation mobile (fifth generation, 5G) communication technology/a sixth-generation (sixth-generation, 6G) mobile communication technology. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In an implementation, at least some function modules of the mobile communication module 150 may be disposed in the processor 110. In an implementation, at least some function modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In an implementation, the modem processor may be an independent component. In another implementation, the modem processor may be independent of the processor 110, and is disposed in a same component as the mobile communication module 150 or another function module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation through the antenna 2.

In an implementation, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), and the like. In an implementation, the electronic device 100 may include one or N displays 194, where N is a positive integer greater than 1.

The electronic device 100 may implement a photographing function through the camera 193, the ISP, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness and the like of the image. The ISP may further optimize parameters such as exposure and a color temperature of a photographing scenario. In an implementation, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In an implementation, the electronic device 100 may include one or N cameras 193, where N is a positive integer greater than 1.

In an implementation, the camera 193 may include a front-facing camera and a rear-facing camera. The front-facing camera may be located on a side on which the display 194 is located, for example, located on the top or the bottom of the display 194. The rear-facing camera may be located on the back of the display 194.

In an implementation, the front-facing camera may be configured to capture a face image of a user in real time, and the face image captured in real time may be sent to the processor 110. The processor 110 may determine, based on the face image of the user, whether a user state changes, for example, whether an angle of the head of the user changes, whether the face of the user is displaced, whether a user expression changes, whether a gesture action is performed, whether a position at which a line of sight is focused changes, and whether an appearance feature changes. When the user state changes, the processor 110 may indicate the display 194 to correspondingly adjust a displayed screen-off image. For example, when the angle of the head of the user changes, the screen-off image also correspondingly rotates.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The memory 121 may be configured to store computer-executable program code. The executable program code includes instructions. The memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the memory 121 may include a high-speed random access memory, or may include a nonvolatile memory, for example, at least one magnetic disk storage device, a flash memory, or a universal flash storage (universal flash storage, UFS). The processor 110 runs instructions stored in the memory 121 and/or instructions stored in the memory disposed in the processor, to perform various function applications and data processing of the electronic device 100.

The electronic device 100 may implement an audio function, for example, music playing and recording, through the audio module 170, the speaker 170A, the receiver 170B, the microphone 170C, the headset jack 170D, the application processor, and the like. The audio module 170 is configured to convert digital audio information into an analog audio signal for output, and is also configured to convert analog audio input into a digital audio signal. The audio module 170 may be further configured to: code and decode an audio signal. In an implementation, the audio module 170 may be disposed in the processor 110, or some function modules in the audio module 170 are disposed in the processor 110. The speaker 170A, also referred to as a "loudspeaker", is configured to convert an audio electrical signal into a sound signal. The electronic device 100 may be used to listen to music or answer a call in a hands-free mode over the speaker 170A. The receiver 170B, also referred to as an "earpiece", is configured to convert an electrical audio signal into a sound signal. When a call is answered or speech information is received through the electronic device 100, the receiver 170B may be put close to a human ear to listen to a voice. The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In another implementation, two microphones 170C may be disposed in the electronic device 100, to collect a sound signal and implement a noise reduction function. In another implementation, three, four, or more microphones 170C may alternatively be disposed in the electronic device 100, to collect a sound signal, implement noise reduction, and identify a sound source, so as to implement a directional recording function and the like. The headset jack 170D is configured to connect to a wired headset.

The pressure sensor 180A is configured to sense a pressure signal, and can convert the pressure signal into an electrical signal. In an implementation, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch position based on a detection signal of the pressure sensor 180A. In an implementation, touch operations that are performed at a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The touch sensor 180K is also referred to as a "touch component". The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor. The touch sensor may transfer the detected touch operation to the application processor to determine a type of a touch event. A visual output related to the touch operation may be provided through the display 194. In another implementation, the touch sensor 180K may alternatively be disposed on a surface of the electronic device 100 at a position different from that of the display 194.

In an implementation, the pressure sensor 180A and/or the touch sensor 180K may be disposed in the display 194, and are/is configured to detect a touch operation on the display 194. When detecting a touch operation (for example, a sliding operation) on the display 194, the pressure sensor 180A and/or the touch sensor 180K may report information about the touch operation to the processor 110. The processor 110 may indicate, based on the information about the touch operation (for example, an operation type, a sliding direction, and a sliding amplitude), the display 194 to correspondingly adjust a displayed screen-off image. For example, when the touch operation is a sliding operation, the screen-off image also correspondingly rotates/moves.

The gyroscope sensor 180B may be configured to determine a moving posture of the electronic device 100. In an implementation, an angular velocity of the electronic device 100 around three axes (namely, axes x, y, and z) may be determined through the gyroscope sensor 180B. The gyroscope sensor 180B may be further configured to perform image stabilization, and be used in a navigation scenario, a motion-sensing game scenario, and the like. Optionally, the gyroscope sensor 180B may be disposed on a circuit board of the electronic device 100.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer. Optionally, the acceleration sensor 180E may be disposed on a circuit board of the electronic device 100.

In an implementation, the gyroscope sensor 180B and/or the acceleration sensor 180E may be configured to detect whether the electronic device 100 moves, so that the processor 110 determines whether relative positions between the electronic device 100 and the user change, for example, whether the angle of the head of the user relative to the electronic device 100 changes (which may also be referred to as whether an angle of the user relative to the electronic device 100 changes), and whether the face of the user relative to the electronic device 100 is displaced (which may also be referred to as whether the user is displaced relative to the electronic device 100). When the relative positions between the electronic device 100 and the user change, the processor 110 may indicate the display 194 to correspondingly adjust the displayed screen-off image.

The barometric pressure sensor 180C is configured to measure barometric pressure. The magnetic sensor 180D includes a Hall sensor, and the electronic device 100 may detect opening and closing of a flip leather cover via the magnetic sensor 180D. The distance sensor 180F is configured to measure a distance. The fingerprint sensor 180H is configured to collect a fingerprint. The temperature sensor 180J is configured to detect a temperature. The ambient light sensor 180L is configured to sense ambient light brightness.

The optical proximity sensor 180G may include, for example, a light emitting diode (LED) and an optical detector, for example, a photodiode. The electronic device 100 emits infrared light via the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100.

The posture sensor 180M may be configured to detect a user state, for example, including but not limited to an angle of the head of the user, a position of the face of the user, a user expression, a gesture action, and a line of sight of the user. The detected user state may be used by the processor 110 to indicate the display 194 to adjust a displayed screen-off image.

A specific type of a sensor configured to detect the user state is not limited in this application.

The button 190 includes a power button, a volume button, and the like. The button 190 may be a mechanical button, or may be a touch button. The electronic device 100 may receive a button input, and generate a button signal input related to a user setting and function control of the electronic device 100. The motor 191 may generate a vibration prompt. The indicator 192 may be an indicator light, and may be configured to indicate a charging status and a power change, or may be configured to indicate a message, a missed call, a notification, and the like. The SIM card interface 195 is configured to connect to an SIM card.

A software system of the electronic device 100 may use a layered architecture, an event-driven architecture, a microkernel architecture, a micro service architecture, or a cloud architecture. For example, a software system of the layered architecture may be an Android (Android) system, or may be a Harmony (harmony) operating system (operating system, OS), or another software system. In this embodiment of this application, an Android system with a layered architecture is used as an example to describe a software structure of the electronic device 100.

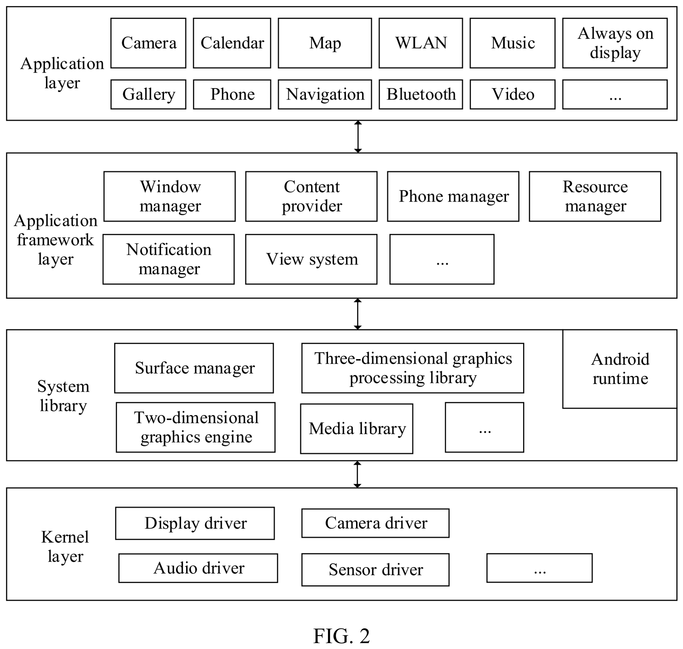

FIG. 2 shows an example of a diagram of a software architecture of the electronic device 100.

In a layered architecture, software is divided into several layers, and each layer has a clear role and task. The layers communicate with each other through a software interface. In an implementation, the Android system is divided into four layers: an application layer, an application framework layer, an Android runtime (Android runtime) and system library, and a kernel layer from top to bottom.

The application layer may include a series of application packages.

As shown in FIG. 2, the application packages may include applications such as Camera, Calendar, Map, WLAN, Music, Messages, Gallery, Phone, Navigation, Bluetooth, Video, and Always on Display. The always on display in this application may be an independent application, or may be a functional component integrated into another application. This is not limited in this application. The application in this application may alternatively be replaced with other software such as an applet or an atomic service.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, hang-up, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of graph or scroll bar text, for example, a notification of an application that is run on a background, or may be a notification that appears on a screen in a form of dialog window. For example, text information is displayed in the status bar, an alert tone is played, the electronic device 100 vibrates, or the indicator light blinks.

The Android runtime includes a core library and a virtual machine. The Android runtime is responsible for scheduling and management of the Android system.

The core library includes two parts: a function that needs to be called in Java language and a core library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to: manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working procedure of software and hardware of the electronic device 100 with reference to an always on display scenario.

The display 194 of the electronic device 100 is in a screen-off state. When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a touch tap operation. An always on display application invokes an interface of the application framework layer to start always on display, and further invokes the kernel layer to start the display driver, to control the display 194 to switch from the screen-off state to an AOD state, so as to display a screen-off image via the display 194.

The following describes application scenarios in embodiments of this application and diagrams of user interfaces in the scenarios.

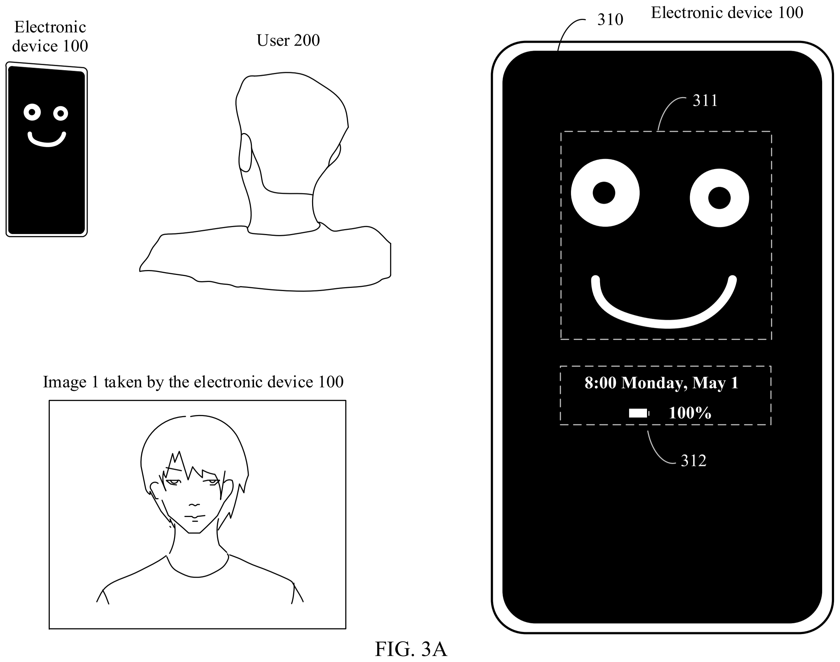

Scenario 1: The electronic device 100 is in an AOD state. When it is detected that the head of a user turns (that is, an angle of the head of the user changes), a screen-off image displayed by the electronic device 100 may accordingly change (for example, turn). For specific examples, refer to FIG. 3A to FIG. 3E.

FIG. 3A is an example of a diagram of an AOD interface.

As shown in FIG. 3A, when the electronic device 100 is in a screen-off state, if it is detected that a user 200 gazes on the display (for example, an image taken via the front-facing camera within preset duration is an image 1), a user interface 310 may be displayed. The user interface 310 may be an AOD interface, and the user interface 310 may include a screen-off image 311 and prompt information 312. The screen-off image 311 may include eyes and a mouth, where a line of sight of the eye in the screen-off image 311 may change, and a position and a curvature of the mouth in the screen-off image may change. The prompt information 312 includes information such as time, a date, and a battery level. The electronic device 100 may obtain an angle of the head of the user 200 based on the image 1 that is of the user 200 and that is taken via the front-facing camera, and determine, based on the obtained angle, that the head of the user 200 is at a center position without turning. In this case, the screen-off image 311 displayed by the electronic device 100 may remain unchanged.

In this application, the angle of the head of the user 200 may be, but is not limited to, an actual angle obtained based on relative positions between the face of the user and shoulders of the user. In some other examples, the angle of the head of the user 200 may alternatively be a difference between a current actual angle and an initial angle (namely, an actual angle obtained based on the image 1 shown in FIG. 3A). This is not limited in this application.

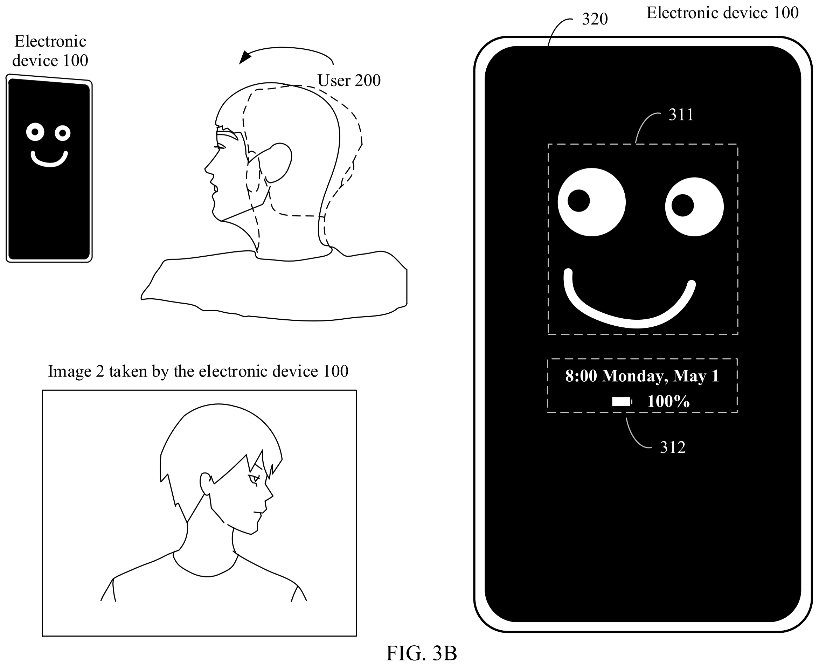

FIG. 3B is an example of a diagram of another AOD interface.

As shown in FIG. 3B, the electronic device 100 may obtain an angle of the head of the user 200 based on an image 2 that is of the user 200 and that is taken via the front-facing camera, and determine, based on the angle, that the head of the user 200 turns to left (with reference to the user 200). In this case, the electronic device 100 may display a user interface 320. The user interface 320 is similar to the user interface 310 shown in FIG. 3A, and a difference lies in that, in the user interface 320, a line of sight of the eye in the screen-off image 311 is leftward (the line of sight of the eye is leftward with reference to the user 200, and the line of sight of the eye is rightward with reference to the electronic device 100). A position of the mouth in the screen-off image 311 may move leftward (the movement is leftward with reference to the user 200, and the movement is rightward with reference to the electronic device 100). This corresponds to turning of the head of the user 200 to the left.

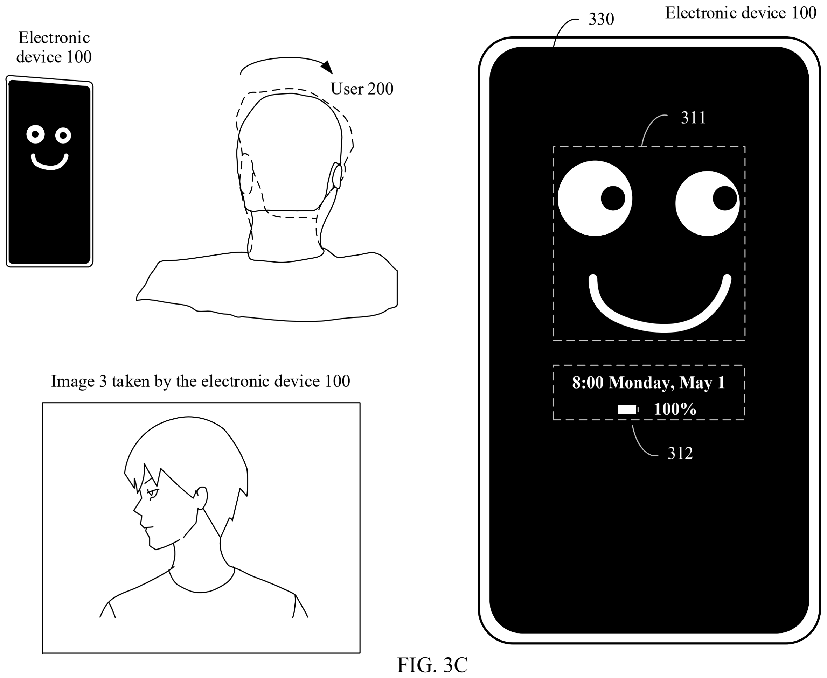

FIG. 3C is an example of a diagram of another AOD interface.

As shown in FIG. 3C, the electronic device 100 may obtain an angle of the head of the user 200 based on an image 3 that is of the user 200 and that is taken via the front-facing camera, and determine, based on the angle, that the head of the user 200 turns to right (with reference to the user 200). In this case, the electronic device 100 may display a user interface 330. The user interface 330 is similar to the user interface 310 shown in FIG. 3A, and a difference lies in that in the user interface 330, a line of sight of the eye in the screen-off image 311 is rightward (with reference to the user 200), and a position of the mouth in the screen-off image 311 may move rightward (with reference to the user 200). This corresponds to turning of the head of the user 200 to the right.

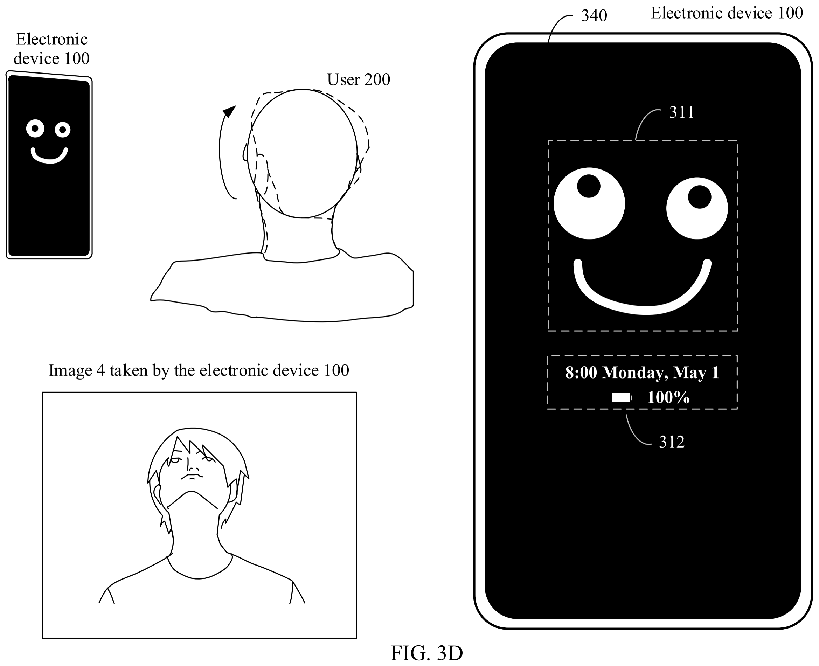

FIG. 3D is an example of a diagram of another AOD interface.

As shown in FIG. 3D, the electronic device 100 may obtain an angle of the head of the user 200 based on an image 4 that is of the user 200 and that is taken via the front-facing camera, and determine, based on the angle, that the head of the user 200 raises. In this case, the electronic device 100 may display a user interface 340. The user interface 340 is similar to the user interface 310 shown in FIG. 3A, and a difference lies in that in the user interface 340, a line of sight of the eye in the screen-off image 311 is upward, and a position of the mouth in the screen-off image 311 may move upward. This corresponds to raising of the head of the user 200.

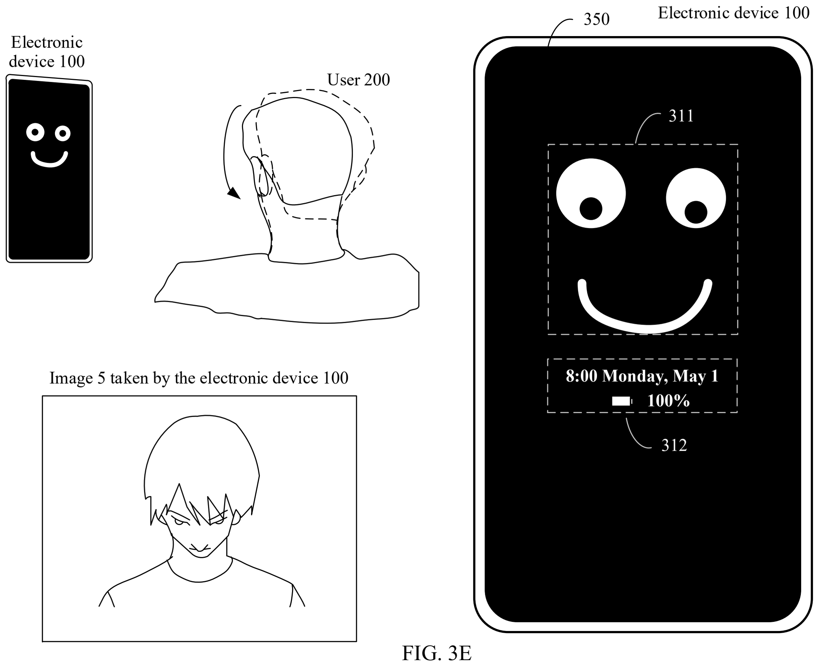

FIG. 3E is an example of a diagram of another AOD interface.

As shown in FIG. 3E, the electronic device 100 may obtain an angle of the head of the user 200 based on an image 5 that is of the user 200 and that is taken via the front-facing camera, and determine, based on the angle, that the user 200 lowers the head. In this case, the electronic device 100 may display a user interface 350. The user interface 350 is similar to the user interface 310 shown in FIG. 3A, and a difference lies in that, in the user interface 350, a line of sight of the eye in the screen-off image 311 is downward, and a position of the mouth in the screen-off image 311 may move downward. This corresponds to lowering of the head of the user 200.

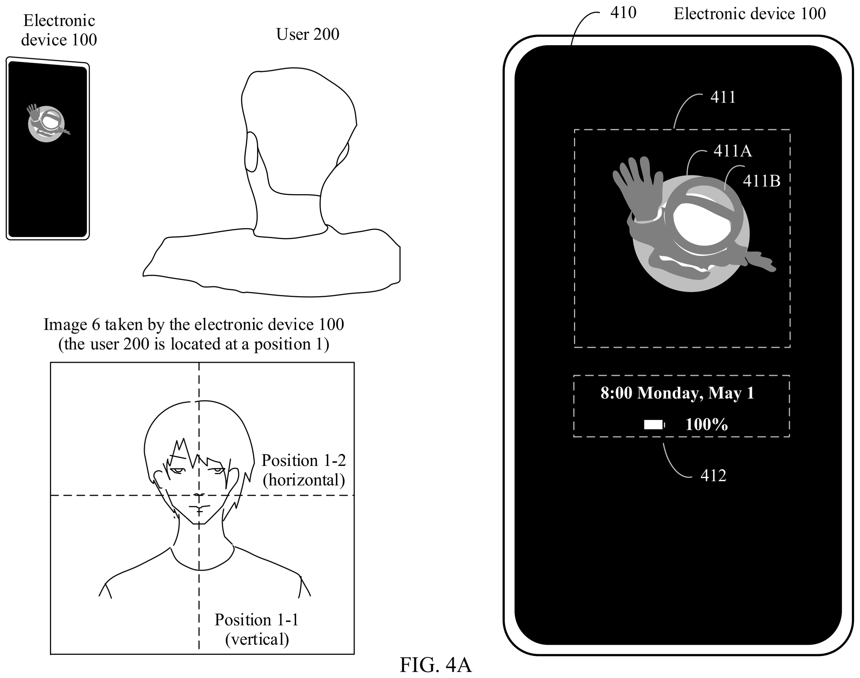

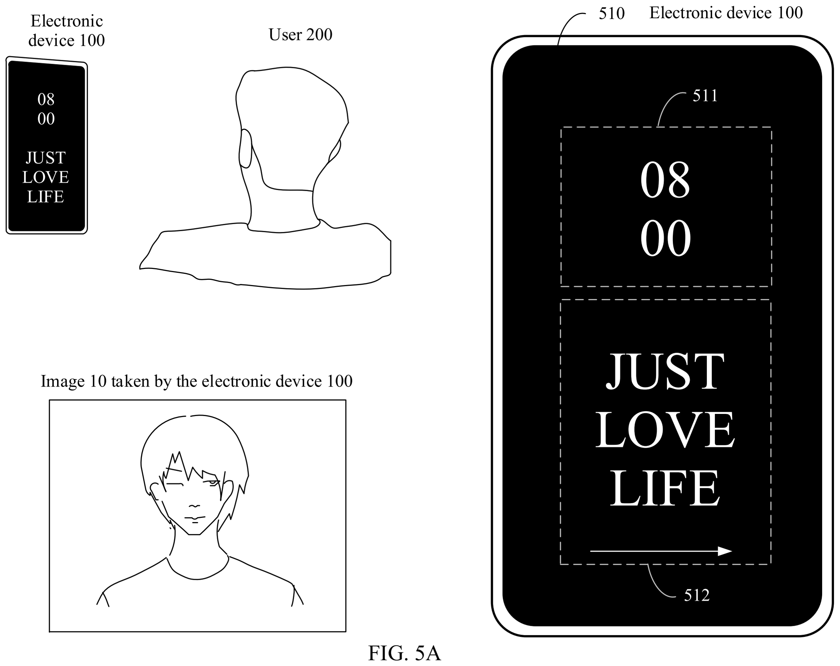

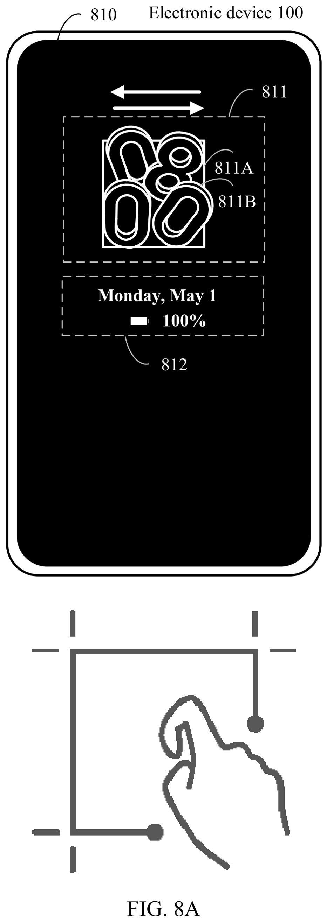

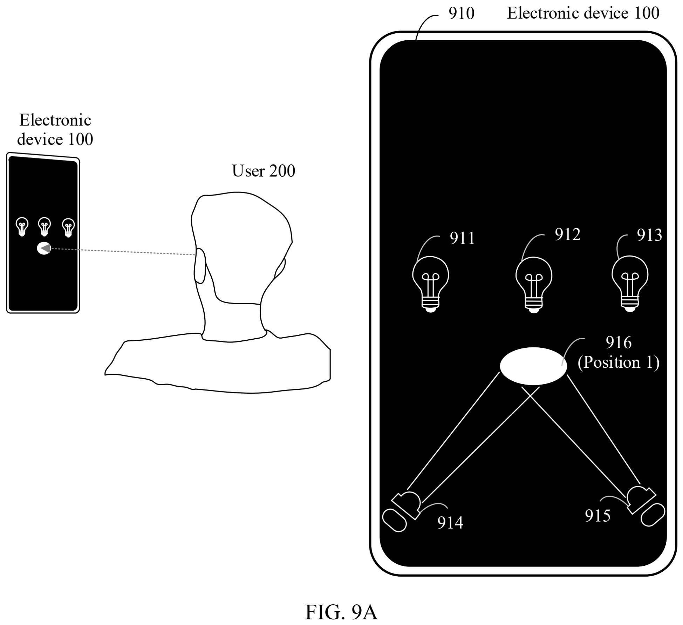

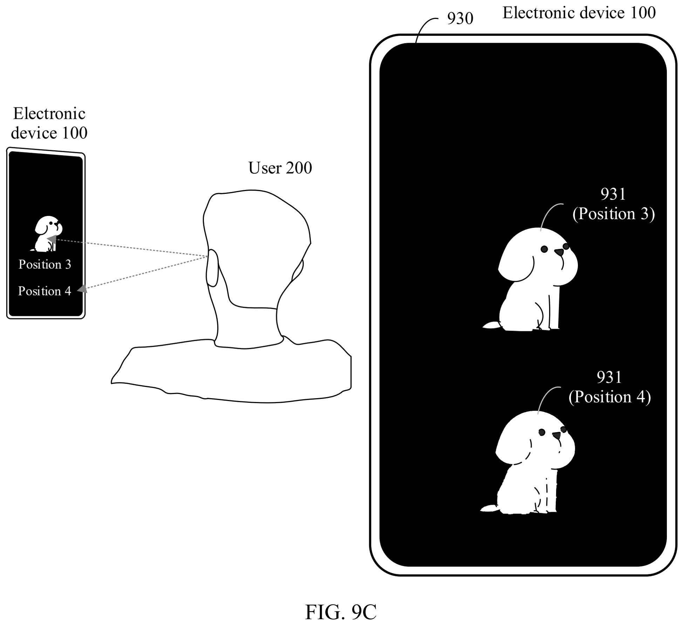

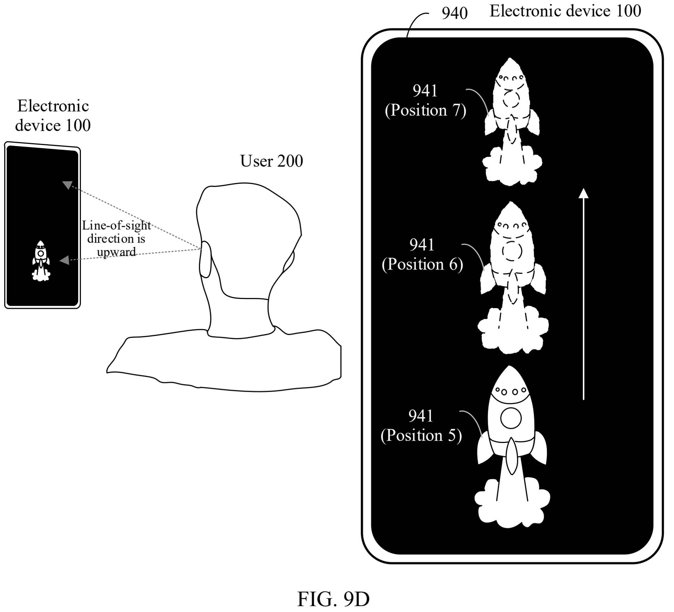

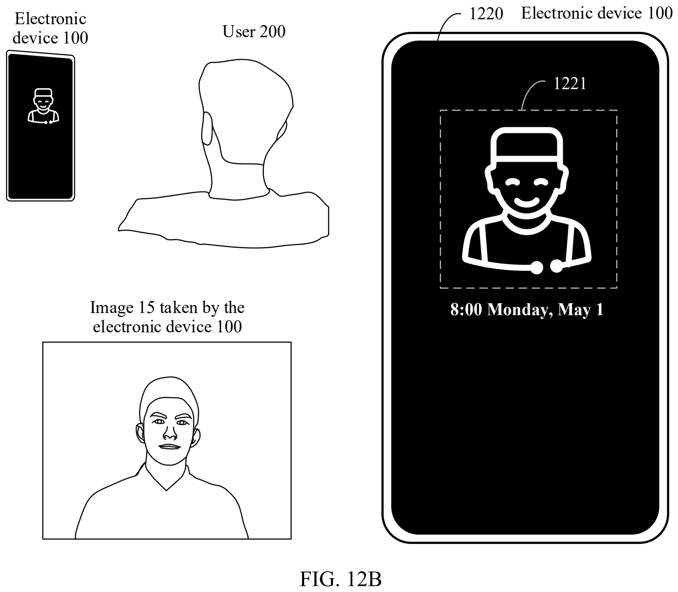

In addition to the screen-off image 311 shown in FIG. 3A to FIG. 3E, in some other examples, the screen-off image may alternatively be another screen-off image, for example, a screen-off image 411 shown in FIG. 4A to FIG. 4E, a screen-off image 512 shown in FIG. 5A, a screen-off image 811 shown in FIG. 8A, a screen-off image in a user interface 910 shown in FIG. 9A, a screen-off image 931 shown in FIG. 9C, a screen-off image 941 shown in FIG. 9D, and a screen-off image 1221 shown in FIG. 12B. Specific content of the screen-off image is not limited in this application.

FIG. 3A to FIG. 3E show an example in which the screen-off image moves. In some other examples, the screen-off image may alternatively rotate around a preset central axis. For example, the screen-off image may move when the screen-off image is a 2D image, and may rotate when the screen-off image is a 3D image. For an example of rotation, refer to the FIG. 4A to FIG. 4E. A change manner of the screen-off image is not limited in this application.

Scenario 2: The electronic device 100 is in an AOD state. When it is detected that a position of the face of a user moves, a screen-off image displayed by the electronic device 100 may accordingly change (for example, move). For specific examples, refer to the FIG. 4A to FIG. 4E.

FIG. 4A is an example of a diagram of another AOD interface.

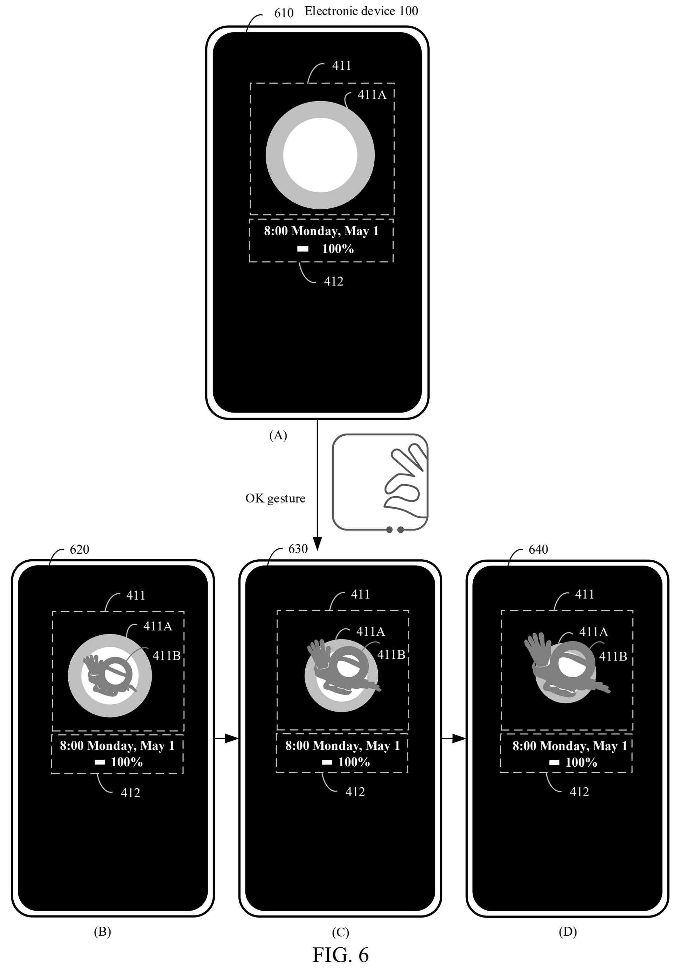

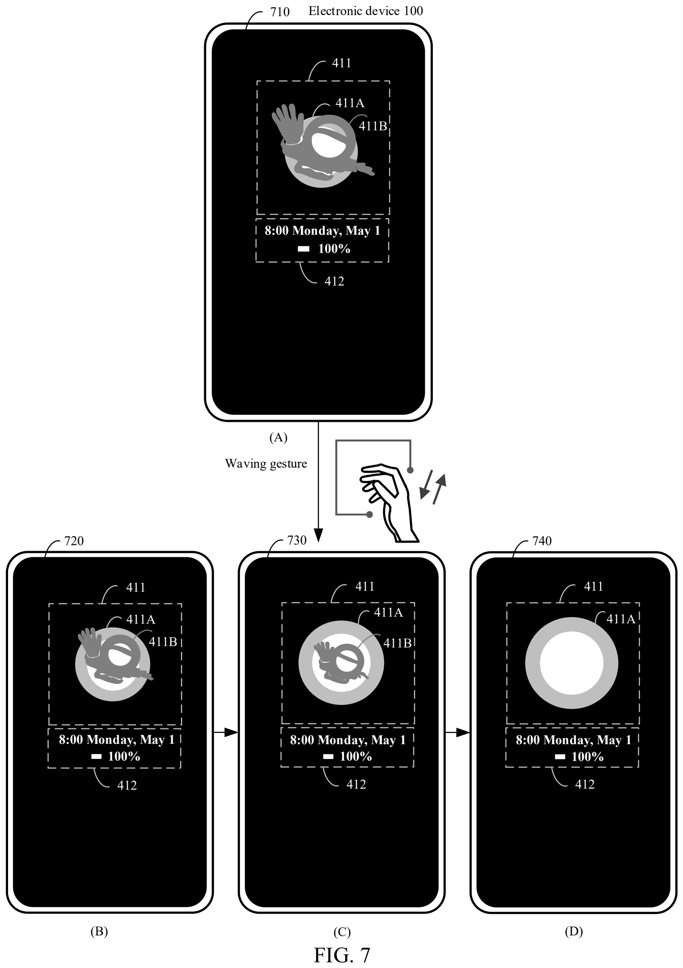

As shown in FIG. 4A, when the electronic device 100 is in a screen-off state, if it is detected that a user 200 gazes on the display (for example, an image taken via the front-facing camera within preset duration is an image 6), a user interface 410 may be displayed. The user interface 410 may be an AOD interface, and the user interface 410 may include a screen-off image 411 and prompt information 412. The screen-off image 411 may include a background 411A and a cartoon person 411B of an astronaut (which may be referred to as an astronaut 411B for short). A size of the background 411A in the screen-off image 411 may change, and a display proportion of the astronaut 411B in the screen-off image 411 may change. For specific examples, refer to FIG. 6 and FIG. 7, details are not described temporarily. A display angle of the astronaut 411B in the screen-off image 411 may change (which may be understood as being rotatable), and the prompt information 412 includes, for example, information such as time, a date, and a battery level. The electronic device 100 may obtain a position 1 of the face of the user 200 based on the image 6 that is of the user 200 and that is taken via the front-facing camera. The position 1 may include a vertical position 1-1 (for example, a vertical position of a midpoint of two eyes of the user 200) and a horizontal position 1-2 (for example, a horizontal position of the nose tip of the user 200). The image 6 may be taken when the electronic device 100 detects that the user 200 gazes on the display. Therefore, the position 1 corresponding to the image 6 may be considered as an initial position of the face of the user 200. Subsequently, the electronic device 100 may continue to take an image of the face of the user 200 via the front-facing camera, and obtain a position of the face of the user 200 based on the taken image. For example, a face position obtained based on a retaken image is still the initial position (namely, the position 1), in other words, the position of the face of the user 200 remains unchanged (which may also be understood as that a horizontal displacement and a vertical displacement of the face of the user 200 are 0 relative to the initial position). In this case, the screen-off image 411 displayed by the electronic device 100 may remain unchanged.

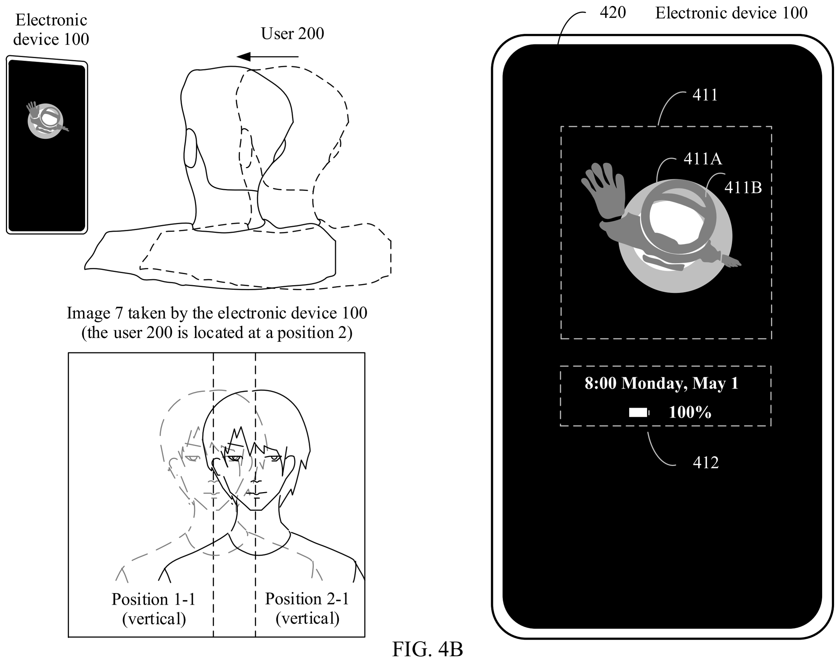

FIG. 4B is an example of a diagram of another AOD interface.

As shown in FIG. 4B, the electronic device 100 may obtain a position 2 of the face of the user 200 based on an image 7 that is of the user 200 and that is taken via the front-facing camera. The position 2 is at a vertical position 2-1, and is located on a right side (with reference to FIG. 7) of a vertical position 1-1 of the initial position (namely, the position 1). The electronic device 100 may determine, based on a relationship between the position 1 and the position 2, that the face of the user 200 moves leftward (with reference to the user 200) relative to the initial position. In this case, the electronic device 100 may display a user interface 420. The user interface 420 is similar to the user interface 410 shown in FIG. 4A, and a difference lies in that, the astronaut 411B in the screen-off image 411 shown in the user interface 420 rotates leftward (the rotation is leftward with reference to the user 200, and the rotation is rightward with reference to the electronic device 100). This corresponds to the leftward movement of the face of the user 200.

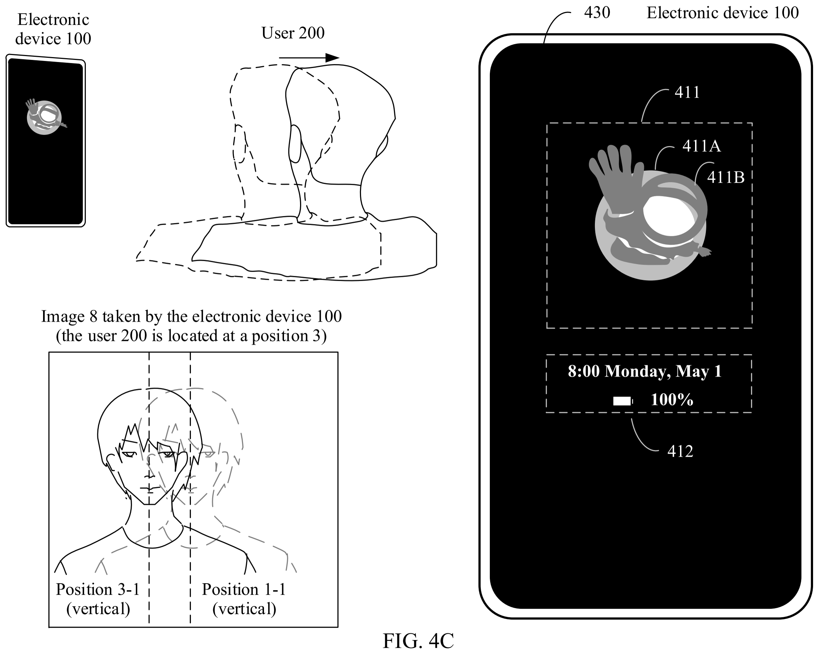

FIG. 4C is an example of a diagram of another AOD interface.

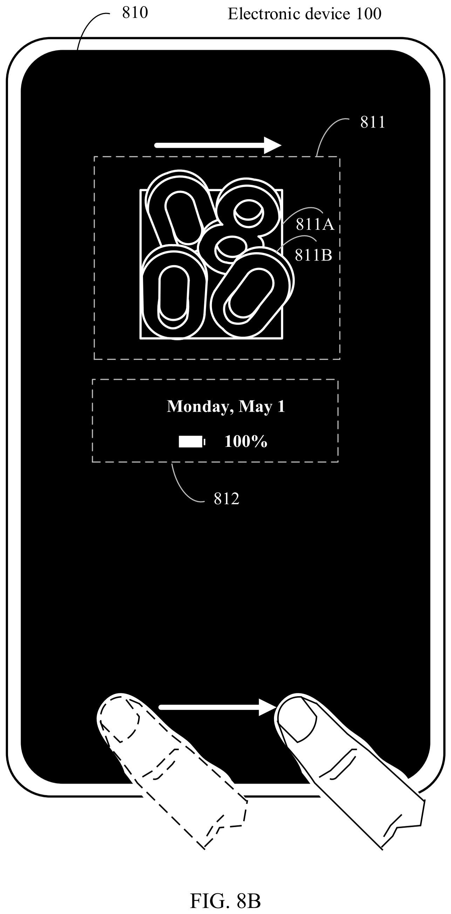

As shown in FIG. 4C, the electronic device 100 may obtain a position 3 of the face of the user 200 based on an image 8 that is of the user 200 and that is taken via the front-facing camera. The position 3 is at a vertical position 3-1, and is located on a left side (with reference to FIG. 8) of the vertical position 1-1 of the initial position (namely, the position 1). The electronic device 100 may determine, based on a relationship between the position 1 and the position 3, that the face of the user 200 moves rightward (with reference to the user 200) relative to the initial position. In this case, the electronic device 100 may display a user interface 430. The user interface 430 is similar to the user interface 410 shown in FIG. 4A, and a difference lies in that, the astronaut 411B in the screen-off image 411 shown in the user interface 430 rotates rightward (with reference to the user 200). This corresponds to the rightward movement of the face of the user 200.

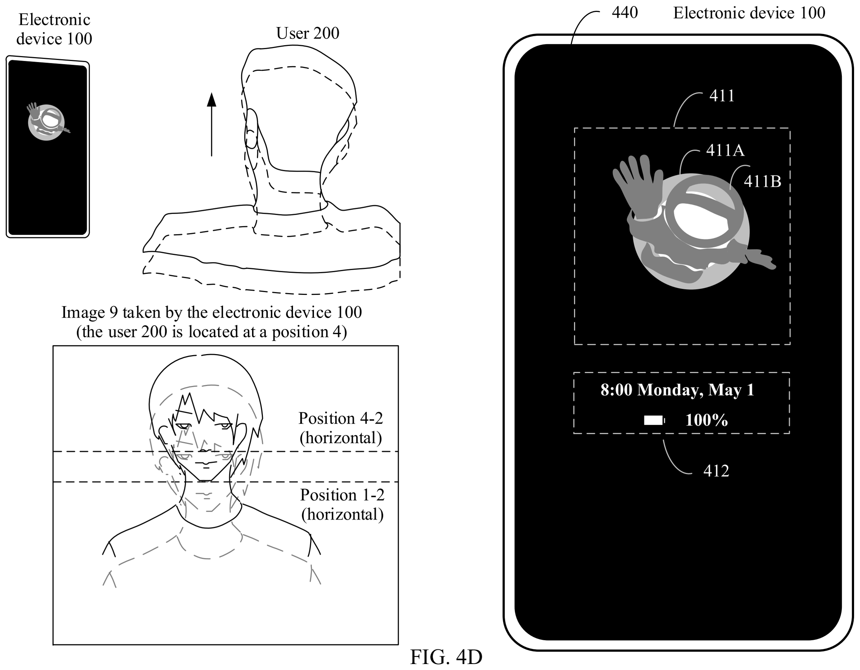

FIG. 4D is an example of a diagram of another AOD interface.

As shown in FIG. 4D, the electronic device 100 may obtain a position 4 of the face of the user 200 based on an image 8 that is of the user 200 and that is taken via the front-facing camera. The position 4 is at a horizontal position 4-2, and is located on an upper side of the horizontal position 1-2 of the initial position (namely, the position 1). The electronic device 100 may determine, based on a relationship between the position 1 and the position 4, that the face of the user 200 moves upward relative to the initial position. In this case, the electronic device 100 may display a user interface 440. The user interface 440 is similar to the user interface 410 shown in FIG. 4A, and a difference lies in that, the astronaut 411B in the screen-off image 411 shown in the user interface 440 rotates upward. This corresponds to the upward movement of the face of the user 200.

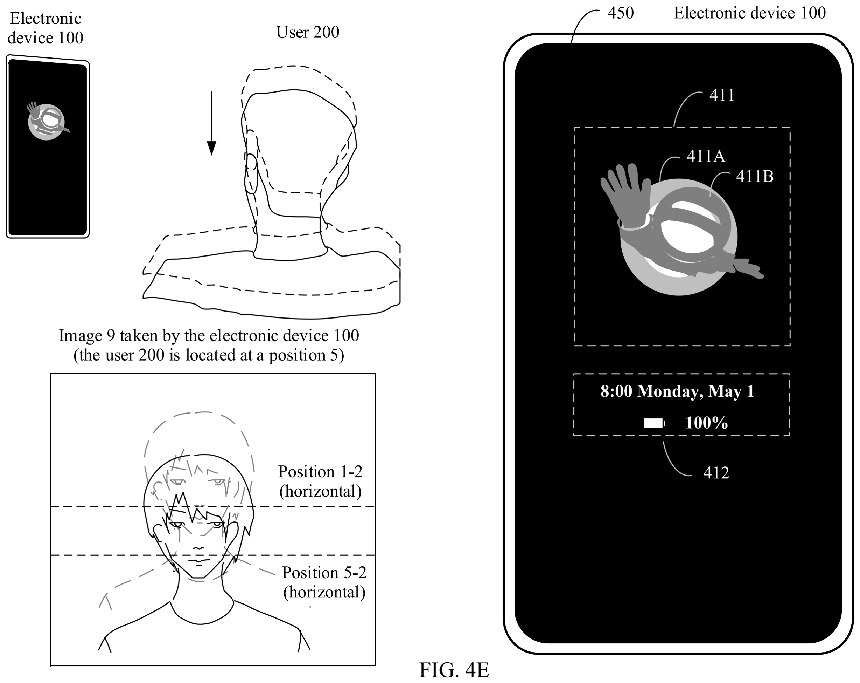

FIG. 4E is an example of a diagram of another AOD interface.

As shown in FIG. 4E, the electronic device 100 may obtain a position 5 of the face of the user 200 based on the image 9 that is of the user 200 and that is taken via the front-facing camera. The position 5 is at a horizontal position 5-2, and is located on a lower side of the horizontal position 1-2 of the initial position (namely, the position 1). The electronic device 100 may determine, based on a relationship between the position 1 and the position 5, that the face of the user 200 moves downward relative to the initial position. In this case, the electronic device 100 may display a user interface 450. The user interface 450 is similar to the user interface 410 shown in FIG. 4A, and a difference lies in that, the astronaut 411B in the screen-off image 411 shown in the user interface 450 rotates downward. This corresponds to the downward movement of the face of the user 200.

Scenario 2 is illustrated by using an example in which a position change of the face of the user is that the face of the user moves on a current plane (a distance between the face of the user and the electronic device remains unchanged). In another implementation, the position change of the face of the user may alternatively be that the distance between the face of the user and the electronic device changes. In some examples, when detecting that the face of the user is closer to the electronic device 100, the electronic device 100 may control the screen-off image to be greater. When detecting that the face of the user is farther away from the electronic device, the electronic device 100 may control the screen-off image to be smaller. For example, after the screen-off image becomes greater, the screen-off image displayed on the display may include partial or all content. For example, the electronic device 100 may detect, based on a size of the face of the user in an image captured via the front-facing camera, whether the distance between the face of the user and the electronic device 100 changes.

Scenario 3: The electronic device 100 is in an AOD state. When the electronic device 100 moves but the face of a user remains unchanged (which may also be understood as that an angle and/or a position of the face of the user relative to the electronic device 100 change/changes), a screen-off image displayed by the electronic device 100 may correspondingly change.

In an implementation, the angle of the head of the user and the position of the face of the user may remain unchanged, and the user may operate the electronic device 100 to rotate relative to the face of the user. For example, in the implementation shown in FIG. 3A, the electronic device 100 may obtain an angle of the electronic device 100 relative to the user 200 based on the taken image 1, and the angle may be understood as an initial angle. Then, the user 200 may remain stationary, and the electronic device 100 may rotate rightward relative to the user 200 (the rotation is rightward with reference to the user 200, and the rotation is leftward with reference to the electronic device 100). In this case, the electronic device 100 may obtain, through taking via the front-facing camera, the image 2 shown in FIG. 3B, determine, based on the image 2, that the angle of the electronic device 100 relative to the user 200 changes relative to the initial angle, and determine, based on a change status of the angle, that the electronic device 100 rotates rightward relative to the user 200 (with reference to the user 200). In this case, the electronic device 100 may display the user interface 320 shown in FIG. 3B, and the screen-off image 311 in the user interface 320 rotates leftward.

In another implementation, the angle of the head of the user and the position of the face of the user may remain unchanged, and the user may operate the electronic device 100 to translate relative to the face of the user. For example, in the implementation shown in FIG. 4A, the electronic device 100 may obtain a position of the electronic device 100 relative to the user 200 based on the image 6, and the position may be understood as an initial position. Then, the user 200 may remain stationary, and the electronic device 100 may translate rightward relative to the user 200 (the translation is rightward with reference to the user 200, and the translation is leftward with reference to the electronic device 100). In this case, the electronic device 100 may obtain, through taking via the front-facing camera, the image 7 shown in FIG. 4B, and determine, based on the image 7, that the electronic device 100 translates rightward relative to the user 200 (with reference to the user 200) relative to the initial position. In this case, the electronic device 100 may display the user interface 420 shown in FIG. 4B, and the screen-off image 411 in the user interface 420 rotates leftward.

In the foregoing example scenario, for example, a rotation direction of the user 200/the electronic device 100 and a movement manner of the user 200/the electronic device 100 includes/include an upward rotation direction/movement direction, a downward rotation direction/movement direction, a leftward rotation direction/movement direction, and a rightward rotation direction/movement direction. In some other examples, the rotation/movement direction may alternatively be an upper left rotation/movement direction, a lower left rotation/movement direction, an upper right rotation/movement direction, and a lower right rotation/movement direction. Correspondingly, a change direction of the screen-off image may alternatively be an upper left change direction, a lower left change direction, an upper right change direction, or a lower right change direction. This is not limited in this application.

Scenario 4: The electronic device 100 is in an AOD state. When the electronic device 100 detects that a user expression changes, a screen-off image displayed by the electronic device 100 may accordingly change.

In an implementation, the electronic device 100 may control, based on a change status of the user expression, the screen-off image to rotate, move, or the like. For a specific example, refer to FIG. 5A.

FIG. 5A is an example of a diagram of another AOD interface.

As shown in FIG. 5A, when the electronic device 100 detects that a user 200 gazes on the display (for example, an image taken via the front-facing camera within preset duration is the image 1 shown in FIG. 3A), a user interface 510 may be displayed. The user interface 510 may be an AOD interface, the user interface 510 may include time 511 and a screen-off image 512, and content of the screen-off image 512 may change. The electronic device 100 may take an image 10 of the user 200 via the front-facing camera, and obtain, based on the image 10, that an expression of the user 200 is squinting the right eye (which may also be understood as that a change of the expression shown in the image 1 is squinting the right eye). The electronic device 100 may control, based on a current expression (that is, squinting the right eye)/expression change status, the screen-off image 512 to rotate rightward, so as to switch content of the screen-off image 512 from "just love me" shown in the user interface 510 to other content (for example, a current date "Monday, May 1"). It may also be understood as that the content "just love me" is switched from a display state to a hidden state, and the foregoing other content is switched from the hidden state to the display state.

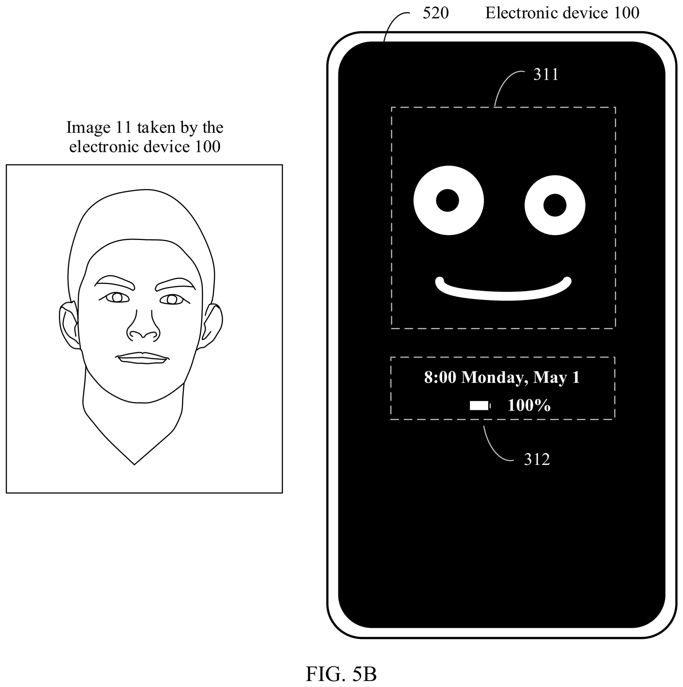

In an implementation, the electronic device 100 may control, based on the user expression, an expression shown in the screen-off image. The expression shown in the screen-off image may change with the user expression, and the expression shown in the screen-off image may be consistent with the user expression. For specific examples, refer to FIG. 5B to FIG. 5E.

FIG. 5B is an example of a diagram of another AOD interface.

As shown in FIG. 5B, when the electronic device 100 is in the AOD state, the electronic device 100 may obtain a user expression based on an image 11 that is of the user and that is taken via the front-facing camera, and display a user interface 520 based on the expression. The user interface 520 is similar to the user interface 310 shown in FIG. 3A. Because the user shown in the image 11 has no expression (the eyes are open and a curvature of the mouth is straight), an expression shown in the screen-off image 311 in the user interface 520 is that the eyes are open and the curvature of the mouth is straight.

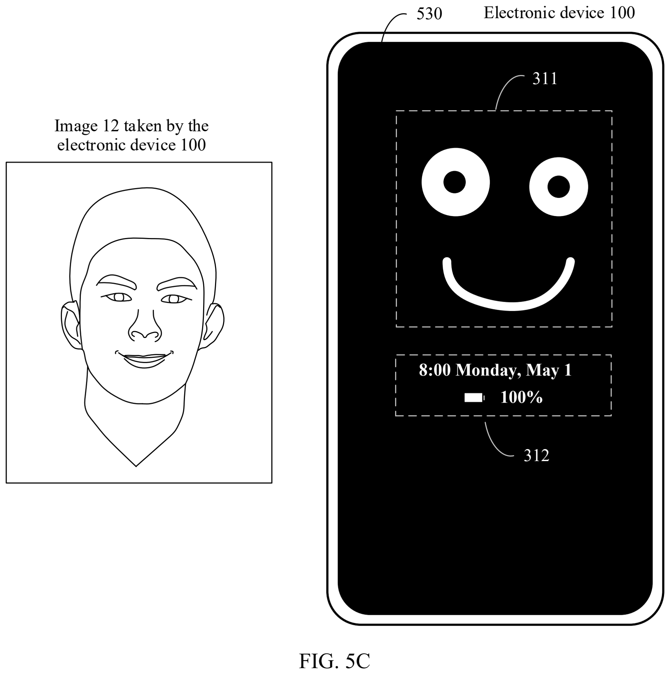

FIG. 5C is an example of a diagram of another AOD interface. FIG. 5C is similar to FIG. 5B, and a difference lies in that, in FIG. 5C, an image that is of the user and that is taken by the electronic device 100 via the front-facing camera is an image 12. Because a user expression shown in the image 12 is a smile, in a user interface 530 displayed by the electronic device 100 based on the image 12, an expression shown in the screen-off image 311 is that the eyes are open and the curvature of the mouth is upward.

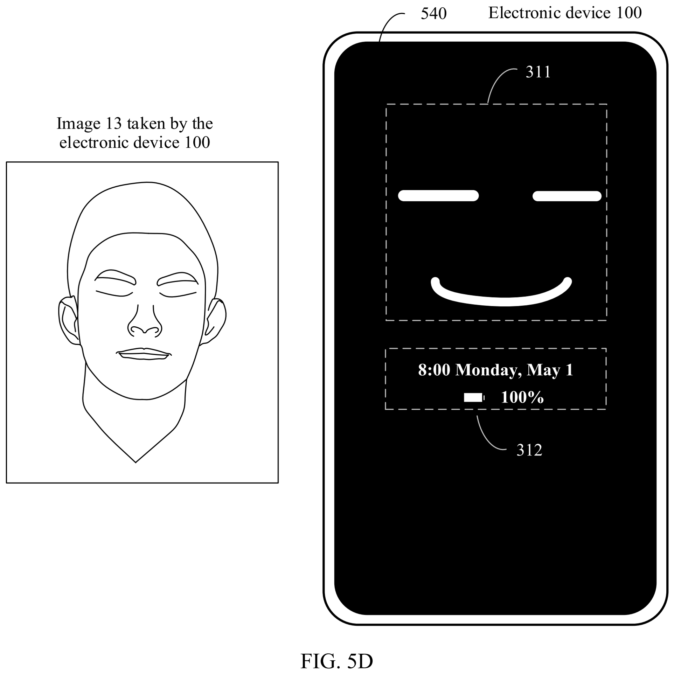

FIG. 5D is an example of a diagram of another AOD interface. FIG. 5D is similar to FIG. 5B, and a difference lies in that, in FIG. 5D, an image that is of the user and that is taken by the electronic device 100 via the front-facing camera is an image 13. Because a user expression shown in the image 13 is that the eyes are closed and the curvature of the mouth is straight, in a user interface 540 displayed by the electronic device 100 based on the image 13, an expression shown in the screen-off image 311 is that the eyes are closed and the curvature of the mouth is straight.

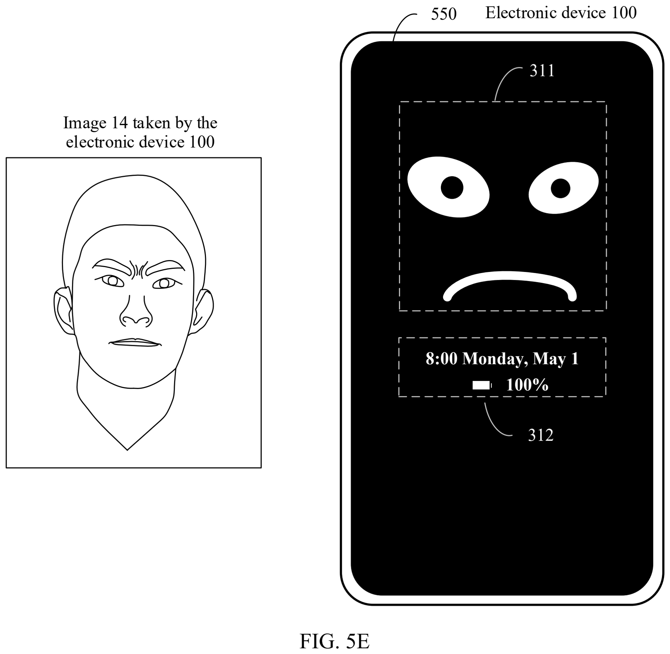

FIG. 5E is an example of a diagram of another AOD interface. FIG. 5E is similar to FIG. 5B, and a difference lies in that, in FIG. 5E, an image that is of the user and that is taken by the electronic device 100 via the front-facing camera is an image 14. Because a user expression shown in the image 14 is anger (the eye tails and the eyebrow tails are upward, the eye heads and the eyebrow heads are downward, and the curvature of the mouth is downward), in a user interface 550 displayed by the electronic device 100 based on the image 14, an expression shown in the screen-off image 311 is that the eye tails are upward, the eye heads are downward, and the curvature of the mouth is downward.

Scenario 5: The electronic device 100 is in an AOD state, and the electronic device 100 may control, based on a user operation, a displayed screen-off image. In one case, when the electronic device 100 detects that a user performs a preset gesture action, the screen-off image displayed by the electronic device 100 may change correspondingly. For specific examples, refer to FIG. 6 and FIG. 7. In another case, the electronic device 100 may control the displayed screen-off image based on a touch operation performed by the user on a display. For specific examples, refer to FIG. 8A and FIG. 8B.

In an implementation, when the user performs a gesture 1, the electronic device 100 may display a start animation effect of the screen-off image. When the user performs a gesture 2, the electronic device 100 may display an end animation effect of the screen-off image. For specific examples, refer to FIG. 6 and FIG. 7. The start animation effect may be a change effect in a period of time after the screen-off image starts changing, and the end animation effect may be a change effect in a period of time before the screen-off image ends changing. Between the start animation effect and the end animation effect, the screen-off image may change with a user state, for example, changes with a change of an angle of the head of the user/displacement of the face of the user.

FIG. 6 is an example of a diagram of another AOD interface.

As shown in (A) in FIG. 6, when the electronic device 100 is in a screen-off state, if it is detected that the user 200 gazes on the display, a user interface 610 may be displayed. The user interface 610 is similar to the user interface 410 shown in FIG. 4A, and a difference lies in that, the screen-off image 411 shown in the user interface 610 includes only the background 411A, and does not include the astronaut 411B. When the electronic device 100 detects that the user 200 performs the gesture 1 (for example, an OK gesture), a start animation effect of the screen-off image 411 may be displayed, for example, a process in which the astronaut 411B appears (which may also be understood as that the astronaut 411B switches from a hidden state to a display state) may be displayed. In this process, the background 411A may gradually decrease, and a display proportion (namely, a proportion of the astronaut 411B in the entire screen-off image) of the astronaut 411B may gradually increase (starting from 0). For some interface examples of this process, refer to (B), (C), and (D) in FIG. 6.

As shown in (B) in FIG. 6, the electronic device 100 may display a user interface 620. The user interface 620 is similar to the user interface 610, and a difference lies in that the background 411A in the user interface 620 is smaller, and the astronaut 411B is further included. As shown in (C) in FIG. 6, the electronic device 100 may display a user interface 630. The user interface 630 may be displayed after the user interface 620. The user interface 630 is similar to the user interface 620, and a difference lies in that the background 411A in the user interface 630 is smaller, and the display proportion of the astronaut 411B is greater. As shown in (D) in FIG. 6, the electronic device 100 may display a user interface 640. The user interface 640 may be displayed after the user interface 630. The user interface 640 is similar to the user interface 630, and a difference lies in that the background 411A in the user interface 640 is smaller, and the display proportion of the astronaut 411B is greater. In some examples, when the electronic device 100 displays the user interface 640, if it is detected that a user state changes, the screen-off image 411 may be controlled to change correspondingly. For specific examples, refer to FIG. 4B to FIG. 4E.

FIG. 7 is an example of a diagram of another AOD interface.

As shown in (A) in FIG. 7, when the electronic device 100 is in the AOD state, a user interface 710 may be displayed. For descriptions of the user interface 710, refer to the descriptions of the user interface 410 shown in FIG. 4A. For example, the user interface 710 may be the user interface 640 shown in (D) in FIG. 6. When the electronic device 100 detects that the user 200 performs the gesture 2 (for example, a gesture of waving a hand forward and backward), an end animation effect of the screen-off image 411 may be displayed, for example, a process in which the astronaut 411B disappears (which may also be understood as that the astronaut 411B switches from a display state to a hidden state) is displayed. In the process, the background 411A may gradually increase, and the display proportion of the astronaut 411B may gradually decrease (a minimum value is 0). For some interface examples of this process, refer to (B), (C), and (D) in FIG. 7. A user interface 720 shown in (B) in FIG. 7 is the user interface 630 shown in (C) in FIG. 6, a user interface 730 shown in (C) in FIG. 7 is the user interface 620 shown in (B) in FIG. 6, and a user interface 740 shown in (D) in FIG. 7 is the user interface 610 shown in (A) in FIG. 6.

This is not limited to the foregoing implementation. In another implementation, when the user performs a gesture 3, the electronic device 100 may also control the screen-off image to implement a change such as rotation or movement. For example, when the electronic device 100 detects that the user performs a left-right wave gesture, the screen-off image 411 in the user interface 410 shown in FIG. 4A may be controlled to rotate leftward or rightward. In another implementation, when the user performs a gesture 4, the electronic device 100 may control the screen-off image to remain unchanged. For example, a case in which the screen-off image changes in a period of time before the user performs the gesture 4 may be understood as that the gesture 4 is used to trigger a process of pausing the change of the screen-off image. Optionally, when the user subsequently performs a gesture 5, a case in which the electronic device 100 may control the screen-off image to continue to change may be understood that the gesture 5 is used to trigger a process of continuing the change of the screen-off image.

Not limited to the gesture in the foregoing example, in some other examples, the gesture of the user may further include an O-shaped gesture, a palm opening gesture, a hand back opening gesture, and the like. A type of the gesture action is not limited in this application.

FIG. 8A is an example of a diagram of another AOD interface.

As shown in FIG. 8A, when the electronic device 100 is in the AOD state, a user interface 810 may be displayed. The user interface 810 may include a screen-off image 811 and a date and battery level 812. The screen-off image 811 may include a background 811A and a pattern 811B of time information, providing the user with a feeling that "the pattern 811B is in the background 811A". Positions of the background 811A and the pattern 811B may change, and an angle of the pattern 811B may change. The electronic device 100 may receive a touch operation performed by the user on the display. The touch operation is, for example, an operation of tapping the display with a knuckle. The electronic device 100 may control, in response to the touch operation, the screen-off image 811 to change, for example, to move leftward or rightward. Moving directions of the background 811A and the pattern 811B may be different, providing the user with a feeling that "the pattern 811B in the screen-off image 811 shakes when the display is tapped".

FIG. 8B is an example of a diagram of another AOD interface.

As shown in FIG. 8B, the electronic device 100 may display the user interface 810 shown in FIG. 8A. The electronic device 100 may receive a touch operation performed by the user on the display. The touch operation is, for example, a sliding operation. The electronic device 100 may control, in response to the touch operation, the screen-off image 811 to change. For example, a moving direction of the screen-off image 811 is consistent with a moving direction of the touch operation. In FIG. 8B, an example in which the touch operation is an operation of sliding from left to right, and correspondingly the screen-off image 811 moves from left to right is used for illustration.

This is not limited to the user operation in the foregoing example. In some other examples, when the electronic device 100 receives a voice input of the user, the screen-off image may be controlled to accordingly change based on the voice input. For example, in the scenario shown in FIG. 6, the OK gesture may be replaced with a voice input "Start playing". A type of the user operation used to control the displayed screen-off image is not limited in this application.

Scenario 6: The electronic device 100 is in an AOD state, and the electronic device 100 may control, based on a line of sight of a user, a displayed screen-off image. When the electronic device 100 detects that a position at which the line of sight is focused changes, the screen-off image displayed by the electronic device 100 may accordingly change.

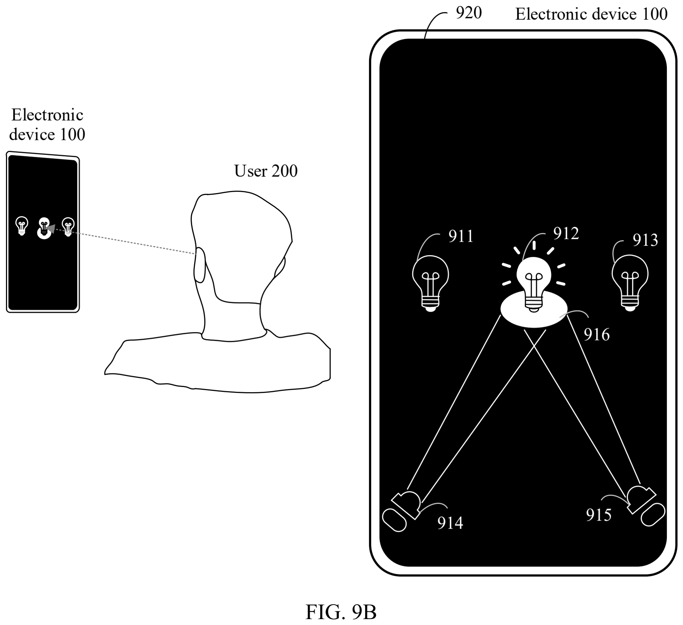

In an implementation, the electronic device 100 may present the position at which the line of sight of the user is focused by using the screen-off image. For specific examples, refer to FIG. 9A, FIG. 9B, and FIG. 9C. In FIG. 9A and FIG. 9B, the position at which the line of sight of the user is focused is presented by using a "light convergence position". In FIG. 9C, the position at which the line of sight of the user is focused is presented by using a cartoon image.

In an implementation, the electronic device 100 may control a status of the screen-off image based on the position at which the line of sight of the user is focused. For specific examples, refer to FIG. 9A, FIG. 9B, and FIG. 9D. In FIG. 9A and FIG. 9B, whether the screen-off image is turned on is controlled based on whether the position at which the line of sight of the user is focused is a position of the screen-off image. In FIG. 9D, a change direction of the screen-off image is controlled based on a moving direction (which may be referred to as a line-of-sight direction for short) of the position at which the line of sight of the user is focused.

FIG. 9A is an example of a diagram of another AOD interface.

As shown in FIG. 9A, when the electronic device 100 is in the AOD state, a user interface 910 may be displayed. The user interface 910 may include a plurality of screen-off images, for example, an image 911, an image 912, an image 913, an image 914, an image 915, and an image 916. The image 911, the image 912, and the image 913 are light bulbs in a screen-off state, the image 914 and the image 915 are lights that emit light, and the image 916 is a convergence position of light emitted by the image 914 and the image 915. A position 1 of the image 916 is a position at which a line of sight of the user 200 is focused and that is detected by the electronic device 100. When the electronic device 100 detects that the position at which the line of sight of the user 200 is focused moves to another position, for example, a position 2 in the user interface 910 rather than a position of the image 911, a position of the image 912, and a position of the image 913, the electronic device 100 may control light of the image 914 and the image 915 to change and the position of the image 916 to change, so that light emitted by the image 914 and the image 915 is converged at the position 2 (that is, the position of the image 916 is the position 2).

FIG. 9B is an example of a diagram of another AOD interface.

As shown in FIG. 9B, when the electronic device 100 is in the AOD state, a user interface 920 may be displayed. The user interface 920 is similar to the user interface 910 shown in FIG. 9A, and a difference lies in that a position at which a line of sight of the user 200 is focused and that is detected by the electronic device 100 is not the position 1, but the position of the image 912. Therefore, in the user interface 920, light emitted by the image 914 and the image 915 is converged at the position of the image 912, in other words, the image 916 is located at the position of the image 912. In addition, that the image 912 in the user interface 920 is in a screen-on state may be understood as that, when the user 200 does not gaze at the image 912, the image 912 (for example, the image 912 shown in the user interface 910) is in a screen-off state. When the user 200 gazes at the image 912, the image 912 (for example, the image 912 shown in the user interface 920) is in a screen-on state. Descriptions of the image 911 and the image 913 are similar to those of the image 912. In some examples, after the implementation shown in FIG. 9B, the position at which the line of sight of the user 200 is focused changes, and is not the position of the image 912. In this case, the electronic device 100 may control the image 912 to be turned off. When the electronic device 100 detects that the position at which the line of sight of the user 200 is focused is the position of the image 911, the electronic device 100 may control the image 911 to be turned on, and control light emitted by the image 914 and the image 915 to converge at the position of the image 911, in other words, the image 916 is located at the position of the image 911.

FIG. 9C is an example of a diagram of another AOD interface.

As shown in FIG. 9C, when the electronic device 100 is in the AOD state, a user interface 930 may be displayed. The user interface 930 may include a screen-off image 931, and the screen-off image 931 is a cartoon image of a puppy. A position 3 of the screen-off image 931 is a position at which a line of sight of the user 200 is located and that is detected by the electronic device 100. When the electronic device 100 detects that the position at which the line of sight of the user 200 is focused moves to another position (for example, a position 4), the electronic device 100 may control the screen-off image 931 to move to the position 4.

FIG. 9D is an example of a diagram of another AOD interface.

As shown in FIG. 9D, when the electronic device 100 is in the AOD state, a user interface 940 may be displayed. The user interface 940 may include a screen-off image 941. The screen-off image 941 may be a launched rocket, and the screen-off image 941 is located at a position 5 on a lower side of the user interface 940. When the electronic device 100 detects that a position at which a line of sight the user 200 is focused moves upward (that is, a line-of-sight direction is upward), the electronic device 100 may control the screen-off image 941 to move upward, for example, move from the position 5 to a position 6, and then move from the position 6 to a position 7, providing the user a feeling that "the rocket is launched". In some examples, in a process in which the screen-off image 941 moves upward, the screen-off image 941 may gradually decrease. This is not limited thereto, and a shape and a pattern of the screen-off image 941 may also change. This is not limited in this application. In this way, a more vivid "rocket launch" effect can be provided.

It may be understood that, when the line of sight of the user 200 is focused on a position, a display manner of a correspondingly displayed screen-off image may be static or dynamic (that is, an animation is displayed). For example, in FIG. 9B, when the user 200 gazes at the image 912, the image 912 may remain in a screen-on state, and in this case, may be understood as being in a static display manner. Alternatively, the image 912 may be in a blinking state, namely, a state in which the screen-on state and the screen-off state are alternately performed, and in this case, may be understood as being in a dynamic display manner.

It may be understood that, when positions at which the line of sight of the user 200 is focused are different, display manners of correspondingly displayed screen-off images may be different. For example, in FIG. 9D, when the line of sight of the user 200 is focused on the position 5, the position 6, and the position 7, sizes of the screen-off images 941 correspondingly displayed at these positions are different. For example, in FIG. 9C, when the line of sight of the user 200 is focused on the position 3, an "exit"/"disappear" animation of the screen-off image 931 (the puppy) may be displayed at the position 3. However, when the line of sight of the user 200 is focused on the position 4, an "entry"/"appearance" animation of the screen-off image 931 (the puppy) may be displayed at the position 4. A specific display manner is not limited in embodiments of this application.

In an implementation, when displaying the AOD interface, if it is detected that the user does not gaze on a display for duration greater than or equal to preset duration, the electronic device 100 may control the display to be turned off. Optionally, when subsequently detecting that the user gazes on the display, the electronic device 100 may control the display to display the AOD interface again. For an example of the AOD interface, refer to the AOD interfaces in the foregoing scenario 1 to scenario 6.

In an implementation, when displaying the AOD interface, if it is detected that an object approaches (for example, if it is detected via an optical proximity sensor), the electronic device 100 may control the display to be turned off. Optionally, when subsequently detecting that the object leaves, the electronic device 100 may control the display to display the AOD interface again. For an example of the AOD interface, refer to the AOD interfaces in the foregoing scenario 1 to scenario 6.

In an implementation, after entering the AOD state, the electronic device 100 may first display a start animation effect of the screen-off image. In some examples, when the electronic device 100 is in the screen-off state, if it is detected that the user gazes on the display, the electronic device 100 may enter the AOD state and display the start animation effect of the screen-off image. It is assumed that the screen-off image is the screen-off image 411 shown in the scenario 2 and the scenario 5, and a start animation effect of the screen-off image 411 may be a process in which the astronaut 411B appears. For an example of an interface in this process, refer to FIG. 6. The interfaces include the user interface 610 shown in (A) in FIG. 6, the user interface 620 shown in (B) in FIG. 6, the user interface 630 shown in (C) in FIG. 6, and the user interface 640 shown in (D) in FIG. 6 in ascending order of time.

In an implementation, before canceling the AOD state, the electronic device 100 may first display an end animation effect of the screen-off image. In some examples, when the electronic device 100 is in the AOD state, if a preset event (for example, the user does not gaze on the display for duration greater than or equal to preset duration, an object approaches, or a user operation is received) is detected, the electronic device 100 may first display the end animation effect of the screen-off image. It is assumed that the screen-off image is the screen-off image 411 shown in the scenario 2 and the scenario 5, and an end animation effect of the screen-off image 411 may be a process in which the astronaut 411B disappears. For an example of an interface in this process, refer to FIG. 7. The interfaces include the user interface 710 shown in (A) in FIG. 7, the user interface 720 shown in (B) in FIG. 7, the user interface 730 shown in (C) in FIG. 7, and the user interface 740 shown in (D) in FIG. 7 in ascending order of time. Then, the electronic device 100 switches to a screen-off state or a screen-on state corresponding to the preset event.

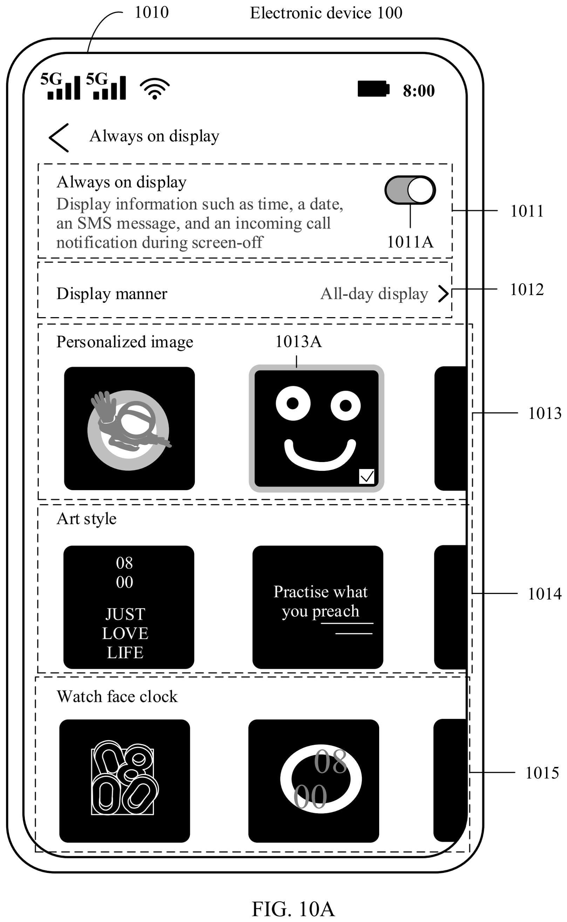

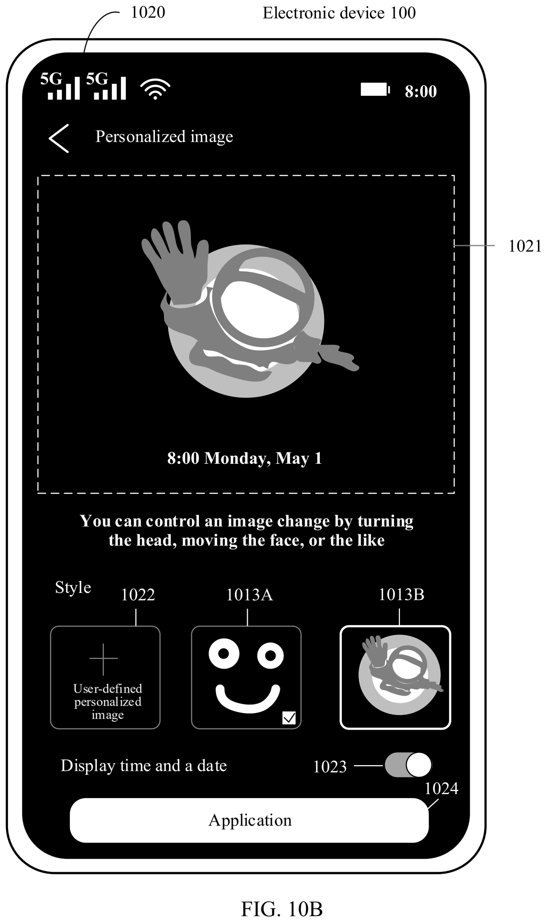

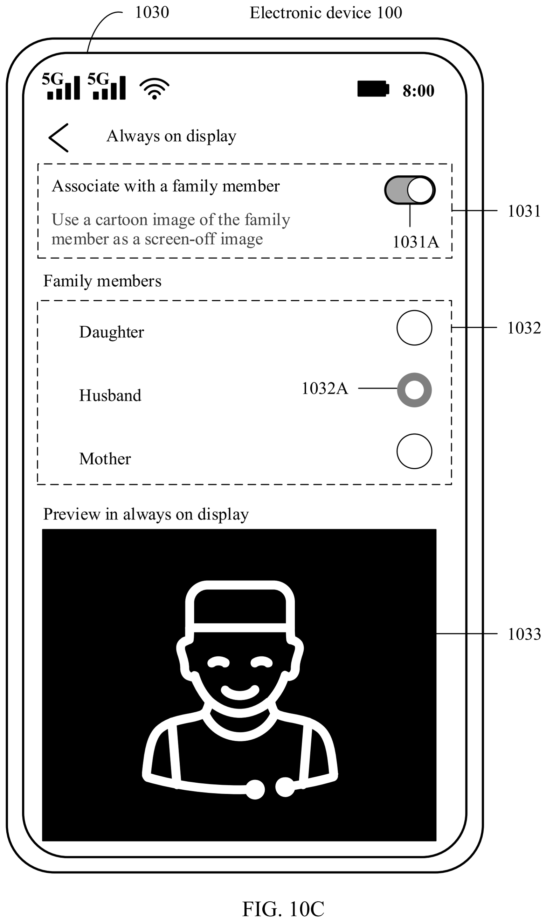

In an implementation, the screen-off image in the AOD state may be selected by the user through a setting interface of the electronic device 100. For specific examples, refer to FIG. 10A, FIG. 10B, and FIG. 10C. Optionally, the user may further preview, through the setting interface, a process in which the screen-off image in the AOD state changes with a user state. A specific process is similar to that in the foregoing scenario 1 to scenario 6. A difference lies in that the screen-off image is not displayed in the AOD interface, but is displayed on the setting interface.

FIG. 10A is an example of a diagram of a setting interface.

As shown in FIG. 10A, the electronic device 100 may display a user interface 1010. For example, the user interface 1010 is a user interface of a setting application. The user interface 1010 may include a title "Always on display", setting information 1011, setting information 1012, and a plurality of categories. The setting information 1011 may include a function name "Always on display", a function description "Display information such as time, a date, an SMS message, and an incoming call notification during screen-off", and a control 1011A. The control 1011A may be used to enable or disable the "Always on display" function. The setting information 1012 may be used to set a display manner of the "Always on display" function, for example, "All-day display" shown in the user interface 1010. Any one of the plurality of categories may include at least one image (which may be referred to as a candidate image for short) that can be selected as a screen-off image. The plurality of categories include, for example, a personalized image category 1013, an art style category 1014, and a watch face clock category 1015. For example, an image 1013A in the category 1013 is in a selected state, indicating that a currently selected screen-off image is the image 1013A.

In an implementation, the electronic device 100 may receive a user operation (for example, a tap operation for the category 1013) for any category in the user interface 1010, and display detailed information about the category in response to the user operation. For a specific example, refer to FIG. 10B.

As shown in FIG. 10B, the electronic device 100 may display a user interface 1020. For example, the user interface 1020 is a user interface of a setting application. The user interface 1020 may include a title "Personalized image", indicating that the current interface is used to display detailed information about a personalized image category. The user interface 1020 may include a plurality of candidate images in the personalized image category, for example, an image 1013A and an image 1013B. In response to a user operation (for example, a tap operation) on any one of the plurality of candidate images, the electronic device 100 may display the candidate image in an area 1021 of the user interface 1020. For example, after the image 1013B is selected, the image 1013B is displayed in the area 1021. The area 1021 may be understood as a simulated AOD interface. The user interface 1020 may include prompt information "You can control an image change by turning the head, moving the face, or the like", to prompt the user with a related AOD function. When the electronic device 100 detects that a user state changes, the image 1013B displayed in the area 1021 may change accordingly. A specific example is similar to that in the foregoing scenario 1 to scenario 6, and details are not described again. The user interface 1020 may further include a control 1022. The control 1022 may be used to upload an image or a video, and the uploaded image or video may be used by the electronic device 100 to obtain a corresponding candidate image. The user interface 1020 further includes a control 1023. The control 1023 may be used to enable or disable a function "Display time and a date in an AOD interface". When the control 1023 is in an on state, the time and the date may be displayed in the area 1021 and the AOD interface. The user interface 1020 further includes a control 1024. The control 1024 may be used to set a status of a setting option of the AOD function to a status of a setting option shown in the user interface 1020. For example, in response to a user operation (for example, a tap operation) on the control 1024, the electronic device 100 may set the image 1013B currently displayed in the area 1021 as a screen-off image, and enable the function "Display time and a date in an AOD interface".

In FIG. 10A and FIG. 10B, an example in which the user selects a screen-off image from a plurality of preset candidate images is used for illustration. In some other examples, the user may alternatively select an associated account, and set a person image of the associated account as a screen-off image. For a specific example, refer to FIG. 10C.

FIG. 10C is an example of a diagram of another setting interface.

As shown in FIG. 10C, the electronic device 100 may display a user interface 1030. In some examples, the user interface 1030 may be displayed in response to a user operation for setting information (not shown) of "Associate with a family member" in the user interface 1010 shown in FIG. 10A. The user interface 1030 may include a title "Always on display" and setting information 1031. The setting information 1031 may include a function name "Associate with a family member", a function description "Use a cartoon image of the family member as a screen-off image", and a control 1031A. The control 1031A is used to enable or disable the function "Associate with a family member". When the function "Associate with a family member" is enabled, the user interface 1030 may display a list 1032 and a preview area 1033. The list 1032 may include setting options of associated family members, for example, a setting option of "Daughter", a setting option 1032A of "Husband", and a setting option of "Mother". For example, the setting option 1032A in the user interface 1030 is in a selected state, indicating that a cartoon image of "Husband" is selected as a screen-off image. The electronic device 100 may obtain a face image of the family member "Husband" selected from the cloud, generate a cartoon image based on the face image, and generate the screen-off image based on the cartoon image. When the electronic device 100 is in the AOD state, the electronic device 100 may display the generated screen-off image. The electronic device 100 may further display the generated screen-off image in the preview area 1033. When the electronic device 100 detects that a user state changes, the image displayed in the preview area 1033 may change accordingly. A specific example is similar to that in the scenario 1 to the scenario 6. Details are not described again.

This is not limited to the example in FIG. 10C. In some other examples, a real person image of the associated account may alternatively be used as a screen-off image. A specific manner of generating a screen-off image based on an image of an associated family member is not limited in this application.

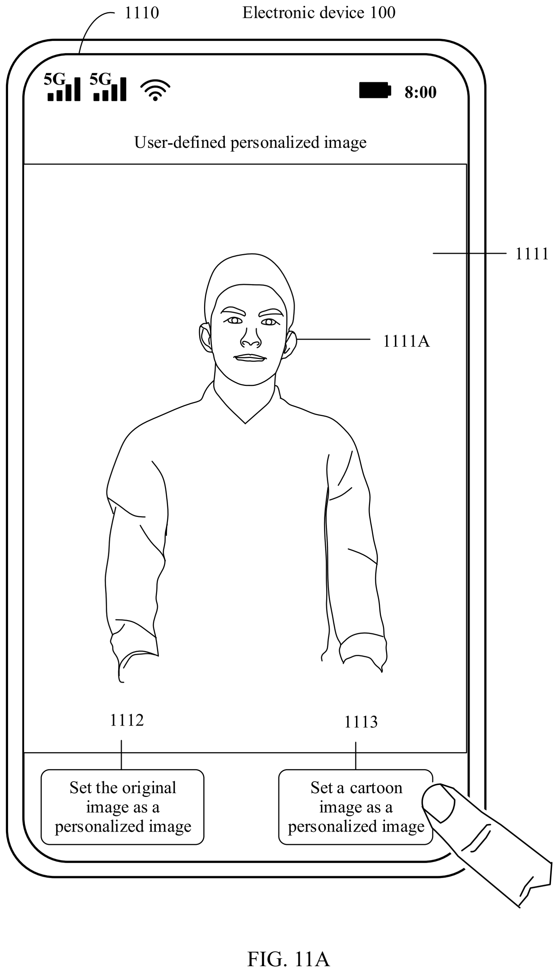

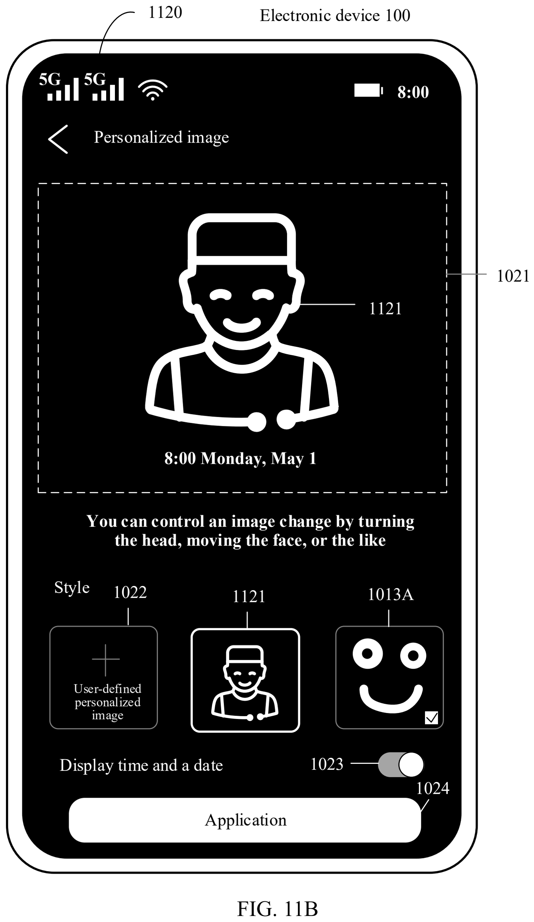

In another implementation, the screen-off image in the AOD state may alternatively be obtained based on an image (for example, an image or a video) uploaded by the user. For specific examples, refer to FIG. 11A and FIG. 11B.

In some examples, the electronic device 100 may display a plurality of images (for example, images stored in the electronic device 100) in response to a user operation (for example, a tap operation) on the control 1022 in the user interface 1020 shown in FIG. 10B. In response to a user operation (for example, a tap operation) on any one (which may be referred to as an image 1) of the plurality of images, the electronic device 100 may display a setting interface for the image 1. For details, refer to a user interface 1110 shown in FIG. 11A.

As shown in FIG. 11A, the user interface 1110 may include a title "User-defined personalized image", an image 1111 (namely, the image 1 uploaded by the user), a control 1112, and a control 1113. The image 1111 may include a person 1111A. The person 1111A may be an image of a real person, or may be an image of a cartoon person. An example in which the person 1111A is the image of the real person is used for description. The control 1112 may be used to trigger generation of a candidate image based on the image 1111 (in this case, a person in the candidate image is a real person), and the control 1113 may be used to trigger generation of a candidate image based on a cartoon image corresponding to the image 1111 (in this case, a person in the candidate image is a cartoon person). In some examples, the electronic device 100 may generate, in response to a user operation (for example, a tap operation) on the control 1113, a cartoon image (for example, a cartoon person corresponding to the person 1111A) based on the image 1111, and generate, based on the cartoon image, a candidate image that can be selected as a screen-off image. The electronic device 100 may display the generated candidate image. For a specific example, refer to a user interface 1120 shown in FIG. 11B.

As shown in FIG. 11B, the user interface 1120 is similar to the user interface 1020 shown in FIG. 10B, and a difference lies in that candidate images in a personalized image category shown in the user interface 1120 further include an image 1121, and the image 1121 is a cartoon image generated based on the image 1111 shown in FIG. 11A. A cartoon person shown in the image 1121 is generated based on the person 1111A in the image 1111. It may be understood that the cartoon person shown in the image 1121 is a cartoon image of the person 1111A. In addition, the image 1121 in the user interface 1120 is selected. Therefore, the image 1121 may be displayed in an area 1021 in the user interface 1120. When the electronic device 100 detects that a user state changes, the image 1121 displayed in the area 1021 may change accordingly. A specific example is similar to that in the scenario 1 to the scenario 6, and details are not described again.

The foregoing example is described by using an example in which the user uploads a person image. In some other examples, the user may further upload an animal image. In some other examples, the user may further upload an object image. The electronic device 100 may directly generate a candidate image based on the uploaded image, or may generate a cartoon image (for example, a cartoon image corresponding to an animal, and a cartoon image corresponding to an object) based on the uploaded image, and generate a candidate image based on the cartoon image. In some other examples, the user may further upload another image, for example, an image obtained by performing screenshot or screen recording on an interface displayed by the electronic device 100. The image unloaded by the user is not limited in this application.

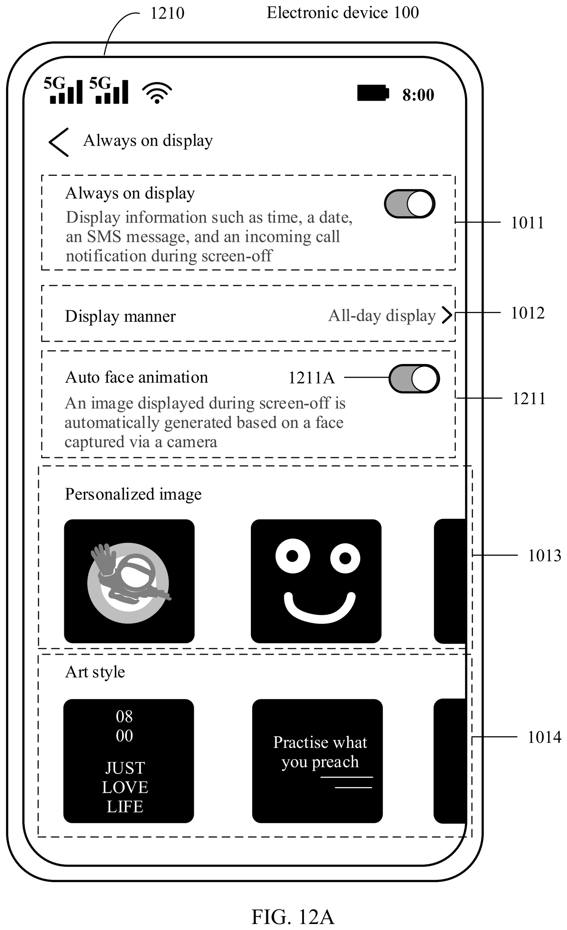

In another implementation, the screen-off image in the AOD state may alternatively be obtained based on an image (for example, an image or a video) captured by the electronic device 100 via a camera. For specific examples, refer to FIG. 12A and FIG. 12B.

FIG. 12A is an example of a diagram of another setting interface.

As shown in FIG. 12A, the electronic device 100 may display a user interface 1210. The user interface 1210 is similar to the user interface 1010 shown in FIG. 10A, and a difference lies in that a candidate image shown in the user interface 1210 is not in a selected state, and the user interface 1210 further includes setting information 1211. The setting information 1211 may include a function name "Auto face animation", a function description "An image displayed during screen-off is automatically generated based on a face captured via a camera", and a control 1211A. The control 1211A is used to enable or disable the "Auto face animation" function. For example, the control 1211A in the user interface 1210 is in an on state. After the "Auto face animation" function is enabled, when the electronic device 100 is in the AOD state, the electronic device 100 may capture an image via a camera (for example, capture a face image of a user via a front-facing camera), generate a screen-off image based on the captured image, and display the generated screen-off image on an AOD interface. For a specific example, refer to FIG. 12B.

FIG. 12B is an example of a diagram of another AOD interface.

As shown in FIG. 12B, when the electronic device 100 is in the AOD state, the electronic device 100 may capture a face image of the user 200 via a front-facing camera, for example, an image 15. The electronic device 100 may display a user interface 1220 based on the captured image 15. The user interface 1220 may include a screen-off image 1221 and time and date information, the screen-off image 1221 may be generated based on the image 15, and a person shown in the screen-off image 1221 is a cartoon person generated based on a real person shown in the image 15. When detecting a state change of the user 200, the electronic device 100 may control the screen-off image 1221 to change. A specific example is similar to that in the foregoing scenario 1 to scenario 6. Details are not described again.

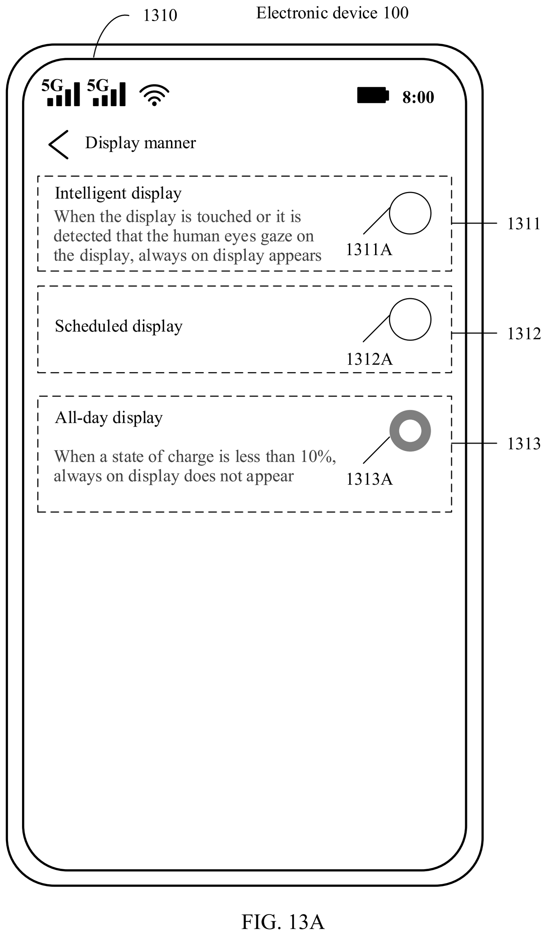

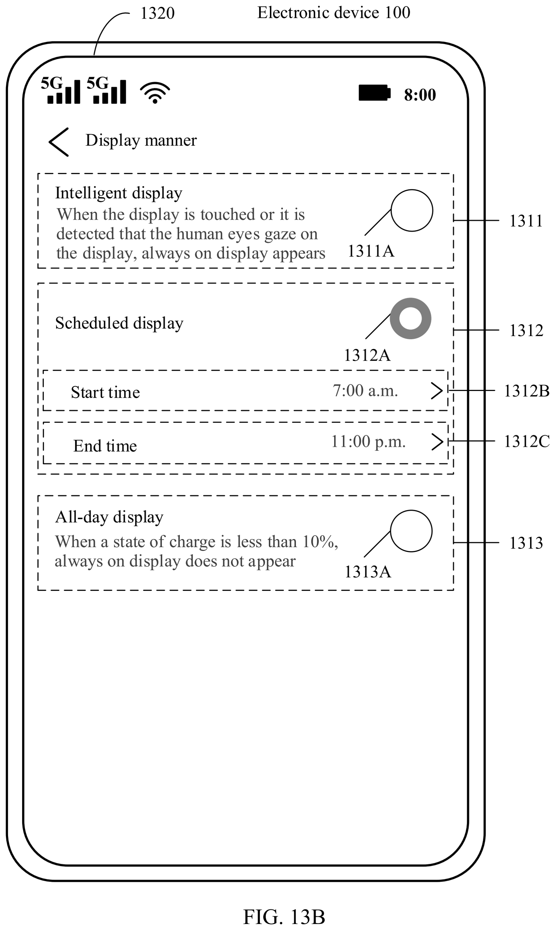

In an implementation, the user may set an always on display manner through the setting interface of the electronic device 100. In some examples, the electronic device 100 may display, in response to a user operation (for example, a tap operation) for the setting information 1012 in the user interface 1010 shown in FIG. 10A, a setting interface of the always on display manner. For specific examples, refer to FIG. 13A and FIG. 13B.

FIG. 13A is an example of a diagram of another setting interface.

As shown in FIG. 13A, the electronic device 100 may display a user interface 1310. The user interface 1310 may include a title "Display manner" and setting information of a plurality of display manners. The plurality of pieces of setting information include, for example, setting information 1311 of "Intelligent display", setting information 1312 of "Scheduled display", and setting information 1313 of "All-day display". The setting information 1311 may include a description "When the display is touched or it is detected that the human eyes gaze on the display, always on display appears" of the "Intelligent display" manner, and a control 1311A used to select the "Intelligent display" manner. The setting information 1312 may include a control 1312A used to select the "Scheduled display" manner. The setting information 1313 may include a description "When a battery level is less than 10%, always on display does not appear" of the "All-day display" manner, and a control 1313A used to select the "All-day display" manner. For example, the control 1313A in the user interface 1310 is in a selected state, indicating that the currently selected display manner of always on display is "All-day display". In this case, when the battery level of the electronic device 100 is greater than or equal to 10%, the electronic device 100 may be in the AOD state other than the screen-on state, and does not enter the screen-off state.

This is not limited to the case in the foregoing example. In some other examples, the electronic device 100 may alternatively select the "Intelligent display" manner as the always on display manner in response to a user operation (for example, a tap operation) on the control 1311A in the user interface 1310. In this case, when the electronic device 100 is in the screen-off state. If it is detected that human eyes gaze on the display or touch the display, the electronic device 100 may enter the AOD state. In some other examples, the electronic device 100 may alternatively select, in response to a user operation (for example, a tap operation) on the control 1312A in the user interface 1310, the "Scheduled display" manner as the display manner of always on display, and may display setting information of always on display time. For a specific example, refer to a user interface 1320 shown in FIG. 13B.

As shown in FIG. 13B, the user interface 1320 is similar to the user interface 1310 shown in FIG. 13A, and a difference lies in that a control in a selected state in the user interface 1320 is a control 1312A, and the setting information 1312 in the user interface 1320 further includes a setting option 1312B of start time of always on display and a setting option 1312C of end time of always on display. For example, the setting option 1312B is set to 7:00 a.m., and the setting option 1312C is set to 11:00 p.m. In this case, from 7:00 a.m. to 11:00 p.m., the electronic device 100 may be in the AOD state other than the screen-on state, and does not enter the screen-off state.

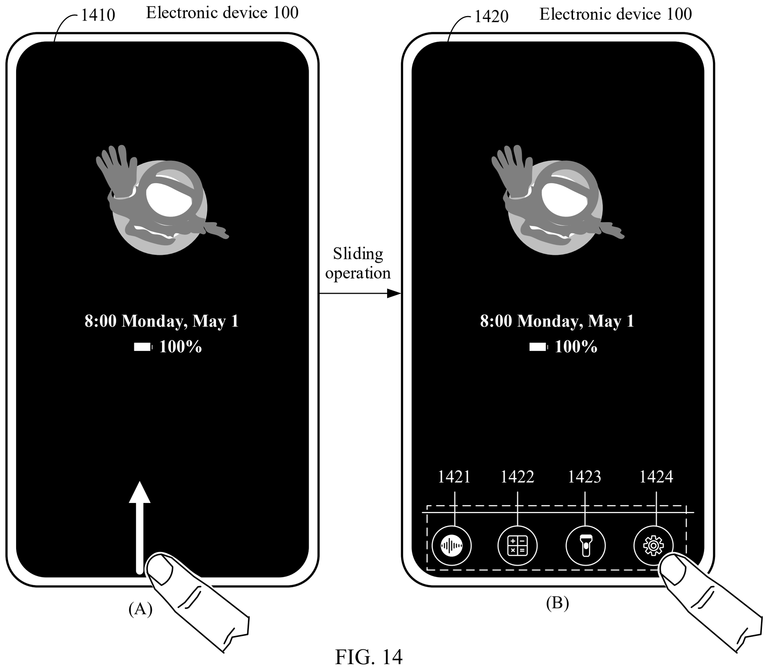

In an implementation, the setting interface of always on display may be displayed in response to a user operation when the electronic device 100 is in the screen-on state. The user operation is, for example, but is not limited to, a user operation on a setting option of an always on display function in a setting application. In another implementation, when the electronic device 100 is in the AOD state, the electronic device 100 may also display the setting interface of always on display in response to a user operation. For a specific example, refer to FIG. 14.

FIG. 14 is an example of a diagram of invoking a setting interface.

As shown in (A) in FIG. 14, the electronic device 100 may display a user interface 1410 (namely, the user interface 410 shown in FIG. 4A), and the electronic device 100 may receive a user operation. The user operation is, for example, a touch operation on a display, and the touch operation is, for example, a sliding operation. The sliding operation is, for example, but is not limited to, sliding with a single finger, sliding with two fingers, sliding with three fingers, sliding from a lower side of the display to an upper side of the display, sliding from an upper side of the display to a lower side of the display, sliding from a left side of the display to a right side of the display, or sliding from a right side of the display to a left side of the display. Alternatively, the user operation may be voice input, gesture input, brainwave input, or the like. FIG. 14 shows an example in which the user operation is sliding with a single finger from a lower side of the display to an upper side of the display. The electronic device 100 may display a plurality of function options in response to the user operation. For details, refer to a user interface 1420 shown in (B) in FIG. 14.

As shown in (B) in FIG. 14, the user interface 1420 is similar to the user interface 1410, and a difference lies in that the user interface 1420 further includes a plurality of function options, for example, an option 1421 of a recording function, an option 1422 of a calculator function, an option 1423 of a flashlight function, and an option 1424 of a setting function. The electronic device 100 may display a setting interface of always on display in response to a user operation (for example, a touch operation) on the option 1424. For specific examples, refer to FIG. 10A, FIG. 10B, FIG. 10C, FIG. 11B, FIG. 12A, FIG. 13A, and FIG. 13B. This is not limited thereto. In some other examples, the electronic device 100 may alternatively display only a part of setting information in the setting interface of always on display, for example, any piece of setting information in the user interface 1010 shown in FIG. 10A, or any category in the user interface 1010.

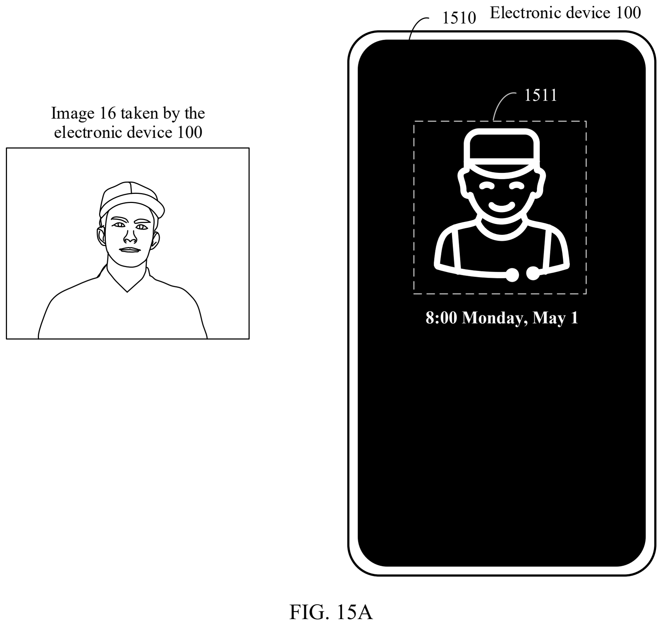

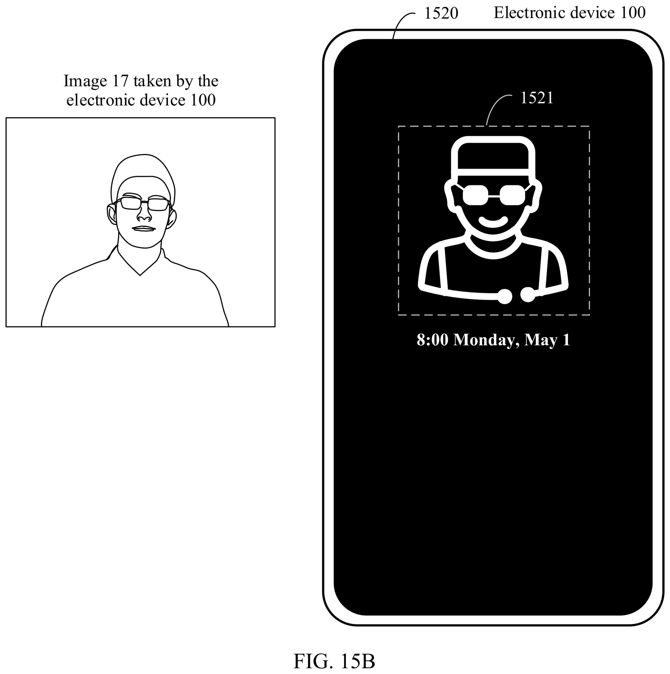

In an implementation, when the electronic device 100 is in the AOD state, the electronic device 100 may adaptively/dynamically adjust a screen-off image (for example, add a corresponding appearance feature to a cartoon image shown in the screen-off image) based on an appearance feature in an image captured via a camera. The appearance feature includes, for example, but is not limited to, whether glasses are worn, whether a hat is worn, a hairstyle, whether an accessory is worn, clothing, and a facial feature. For specific examples, refer to FIG. 15A and FIG. 15B.

FIG. 15A is an example of a diagram of another AOD interface.

As shown in FIG. 15A, when the electronic device 100 is in the AOD state, the electronic device 100 may capture a face image of the user 200 via a front-facing camera, for example, an image 16. In addition, the electronic device 100 may display a user interface 1510 based on the image 16. The user interface 1510 is similar to the user interface 1220 shown in FIG. 12B, and a difference lies in that appearance features of screen-off images are different. A screen-off image 1511 in the user interface 1510 is generated based on the image 16, and the screen-off image 1221 in the user interface 1220 is generated based on the image 15. Because a person in the image 16 is the same as the person in the image 15 shown in FIG. 12B, and a difference lies in that person in the image 16 wears a hat, and the person in the image 16 does not wear a hat, a cartoon person shown in the screen-off image 1511 is the same as the cartoon person shown in the screen-off image 1221, and a difference lies in that the cartoon person shown in the screen-off image 1511 wears a hat, the cartoon person shown in the screen-off image 1221 does not wear a hat.

FIG. 15B is an example of a diagram of another AOD interface.

As shown in FIG. 15B, when the electronic device 100 is in the AOD state, the electronic device 100 may capture a face image of the user 200 via a front-facing camera, for example, an image 17. In addition, the electronic device 100 may display a user interface 1520 based on the image 17. The user interface 1520 is similar to the user interface 1220 shown in FIG. 12B, and a difference lies in that appearance features of screen-off images are different. A screen-off image 1521 in the user interface 1520 is generated based on the image 17, and the screen-off image 1221 in the user interface 1220 is generated based on the image 15. Because a person in the image 17 is the same as the person in the image 15 shown in FIG. 12B, and a difference lies in that the person in the image 17 wears glasses, and the person in the image 17 does not wear glasses, a cartoon person shown in the screen-off image 1521 is the same as the cartoon person shown in the screen-off image 1221, and a difference lies in that the cartoon person shown in the screen-off image 1521 wears glasses, the cartoon person shown in the screen-off image 1221 does not wear glasses.

In an implementation, when the screen-off image is an image generated based on a person image of an associated account, the electronic device 100 may obtain the person image of the associated account (for example, obtain the person image on a current day) from the cloud, and adaptively/dynamically adjust the screen-off image (for example, add a corresponding appearance feature to a cartoon image shown in the screen-off image) based on an appearance feature in the obtained person image. A specific example is similar to those in FIG. 15A and FIG. 15B, and a difference lies in that, in this case, a face image used to generate a screen-off image is not taken via the camera of the electronic device 100, but is obtained by the electronic device 100 from the cloud. This is not limited thereto. In some other examples, the cloud may alternatively obtain an appearance feature in a person image of an associated account, and the electronic device 100 may directly obtain the appearance feature (for example, the appearance feature on a current day) of the associated account from the cloud.

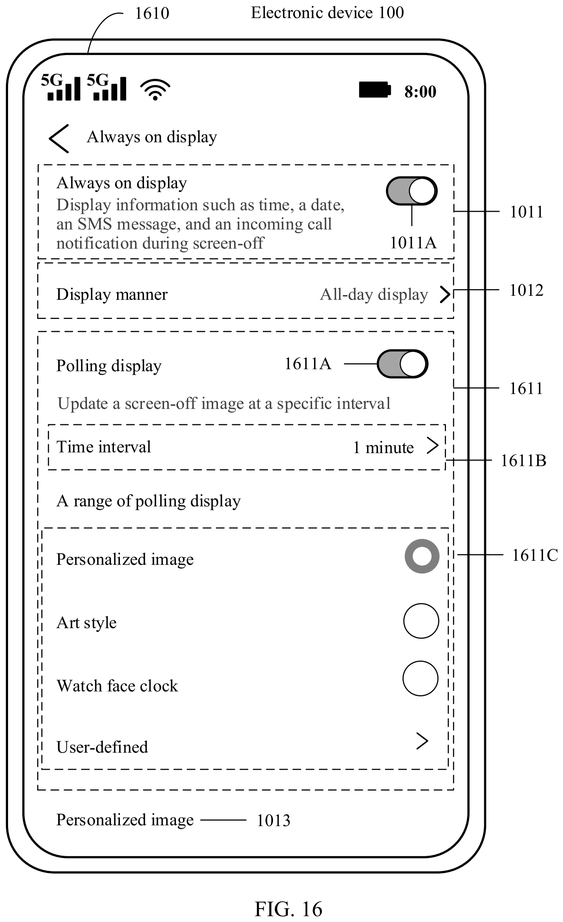

The foregoing implementation is described by using an example in which one screen-off image is displayed in the AOD state. In another implementation, the electronic device 100 may alternatively display a series of screen-off images in the AOD state, for example, update the displayed screen-off image at an interval of preset duration, that is, a next screen-off image is switched for display at the interval of preset duration. For a specific example, refer to FIG. 16.

FIG. 16 is an example of a diagram of another setting interface.

As shown in FIG. 16, the electronic device 100 may display a user interface 1610. The user interface 1610 is similar to the user interface 1010 shown in FIG. 10A, and a difference lies in that the user interface 1610 further includes setting information 1611. The setting information 1611 may include a function name "Polling display", a function description "Update a screen-off image at a specific interval", a control 1611A, a setting option 1611B, and a setting list 1611C. The control 1611A is used to enable or disable the function "Polling display", and the setting option 1611B is used to set a time interval of "Polling display", namely, a time interval for updating the screen-off image, for example, 1 minute shown in the user interface 1610. The setting list 1611C is used to set a range of "Polling display", namely, a range of the screen-off image displayed in the AOD state. The setting list 1611C may include setting options of a plurality of categories (namely, a plurality of categories in the user interface 1010 shown in FIG. 10A), for example, include a setting option of "Personalized image", a setting option of "Artistic style", and a setting option of "Watch face clock". When any setting option is in a selected state, the screen-off image displayed in the AOD state may include a candidate image in a category corresponding to the setting option. In some examples, when the setting option of "Personalized image" is in the selected state, and the electronic device 100 is in the AOD state, candidate images in the personalized image category may be displayed in a specific order at an interval of preset duration. For example, the "Personalized image" category includes the image 1013A and the image 1013B that are in the user interface 1020 shown in FIG. 10B, and the electronic device 100 may first display the user interface 310 shown in FIG. 3A (the screen-off image is the image 1013A), and then display the user interface 410 shown in FIG. 4A (the screen-off image is the image 1013B, at time of 8:01) after the preset duration (for example, 1 minute) elapses. The setting list 1611C may further include a customized setting option. The setting option may be used to customize a plurality of images as screen-off images of polling display, for example, include some images in different categories, and an image stored in the electronic device 100.

This is not limited to the setting interface in the foregoing example. In a specific implementation, the setting interface may include more or fewer controls. In some other examples, the user interface 1020 shown in FIG. 10B may further include a control used to enable or disable a function "Display a battery level on an AOD interface".

In the foregoing implementation, an example in which there is only one user of the electronic device 100 is used for description. In another implementation, there may be a plurality of users of the electronic device 100. The electronic device 100 detects that the plurality of users are gazing on the display, and may control a screen-off image to change. In some examples, after the implementation shown in FIG. 3A, an image taken by the electronic device 100 via the front-facing camera includes faces of a plurality of users, and the electronic device 100 may control the displayed screen-off image 311 to change to a preset expression. The preset expression is, for example, but is not limited to, an expression of surprise/panic loss (in this case, the eyes in the screen-off image 311 may be greater, and the mouth may be round). In some other examples, the electronic device 100 may alternatively control a quantity of displayed screen-off images 311 to increase. It is assumed that an image taken by the electronic device 100 via the front-facing camera includes faces of two users, the electronic device 100 may display two screen-off images 311. Statuses of the two screen-off images 311 are respectively determined by states of the two users. For example, if the face of a user 1 in the image is greater than the face of a user 2, a screen-off image 311 corresponding to the user 1 is greater than a screen-off image 311 corresponding to the user 2. A status of any screen-off image 311 changes with a state of a corresponding user. A specific description is consistent with the description of the implementation in which there is one user. A change manner of the screen-off image when the electronic device 100 detects that a plurality of users are gazing on the display is not limited in this application.

The display method in this application is described based on the foregoing embodiments. The method may be applied to the electronic device 100 shown in FIG. 1. The method may be applied to the electronic device 100 shown in FIG. 2.

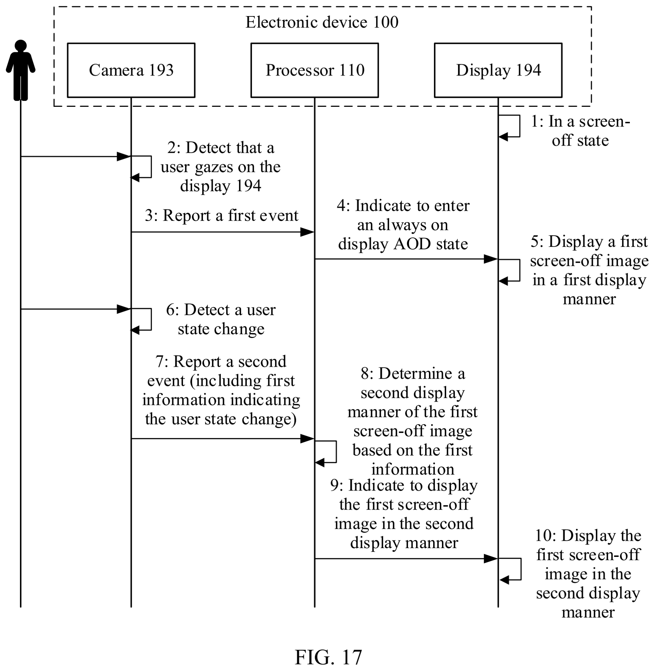

FIG. 17 is a schematic flowchart of a display method according to an embodiment of this application. FIG. 17 is described by using an example in which a sensor configured to detect a user state is the camera 193. The method may include but is not limited to the following steps.

1: The display 194 of the electronic device 100 is in a screen-off state.

2: The camera 193 of the electronic device 100 detects that a user gazes on the display 194.

3: The camera 193 reports a first event to the processor 110 of the electronic device 100, where the first event is an event that the user gazes on the display 194.

4: The processor 110 indicates, based on the first event, the display 194 to enter an AOD state.

5: The display 194 switches from the screen-off state to the AOD state in response to an instruction of the processor 110. In this case, a first screen-off image may be displayed in a first display manner.

In an implementation, the processor 110 may send information about the first display manner (which may be referred to as first display information for short) to the display 194, and the display 194 may perform display based on the received first display information, to display the first screen-off image in the first display manner. In some examples, the first screen-off image is an image including a plurality of layers, and the first display information may include information about a display manner of the plurality of layers. The display manner of the layers includes, for example, but is not limited to, whether to perform display, a display position, a display sequence, a display size, and a display style (for example, a color and a shape). In some other examples, the first screen-off image is an animation, and the first display information may include information about a point for starting playing, and optionally, information about a point for ending playing. For example, the first screen-off image is an animation of 10 seconds. In the first display information, the information about the point for starting playing is the 2^{nd} second, and the information about the point for ending playing is an 8^{th} second.

In an implementation, the first display manner is related to a user state detected by the camera 193 of the electronic device 100. The user state may include but is not limited to an angle of the head of a user relative to the electronic device 100, a position of the face of the user relative to the electronic device 100, a user expression, a position at which a line of sight of the user is focused, a gesture action, an appearance feature (for example, clothing, an accessory, a facial feature, and a hairstyle), and the like. For example, a display manner of the screen-off image 311 in FIG. 3A to FIG. 3E is related to the angle of the head of the user. For another example, a display manner of the screen-off image 411 in FIG. 4A to FIG. 4E is related to the position of the face of the user. For another example, a display manner of the screen-off image 311 in FIG. 5B to FIG. 5E is related to the user expression. For another example, a display manner of the screen-off image (for example, the image 912, the image 914, the image 915, and the image 916) in FIG. 9A and FIG. 9B is related to the position at which the line of sight of the user is focused.

In an implementation, a display manner of the screen-off image may include but is not limited to a display position, a display size, a display angle, display content, a display color, a display shape, display brightness, an appearance feature, and the like. For an example of the display content, refer to the screen-off image 512 shown in FIG. 5A. In some examples, the screen-off image may include a virtual object, and the virtual object may include a person, an animal, an object, and the like. The display manner of the screen-off image may include a display manner of the virtual object, and the display manner of the virtual object may include a display manner of the entire virtual object, or may include a display manner of a part of the virtual object (for example, the face of the person or a facial feature of the person). The appearance feature is specifically an appearance feature of the virtual object.

6: The camera 193 detects a user state change, including for example, but is not limited to, at least one of the following: a change in the angle of the head of the user relative to the electronic device 100, a change in the position of the face of the user relative to the electronic device 100, a change in the user expression, and a user operation (for example, a touch operation, a gesture action, or voice input) performed by the user, a change in the position at which the line of sight of the user is focused, a change in the appearance feature of the user changes, or the like.

7: The camera 193 reports a second event (including first information indicating the user state change) to the processor 110. The second event is an event of the user state change, and the second event may include the first information. The first information may include related information of the user state change, and the first information includes, for example, but is not limited to, at least one of the following: occurrence time, a type of the user state (a plurality of user states in Example 5 in FIG. 17 belong to different types), a user state before the change, a user state after the change, and a value (which may be referred to as a metric value for short) used to measure a change status of the user state. The metric value is, for example, a change value of the angle of the head of the user, a change amplitude of the position of the face of the user, or a change amplitude of the position at which the line of sight of the user is focused.

8: The processor 110 determines a second display manner of the first screen-off image based on the first information, where the second display manner is different from the first display manner.

In an implementation, the processor 110 may determine, based on the first information, to adjust a display manner and adjustment content of the first screen-off image. Optionally, the processor 110 may determine a change degree of the display manner of the first screen-off image based on the metric value in the first information. The change degree may represent a difference between the second display manner and the first display manner. A specific example is as follows.

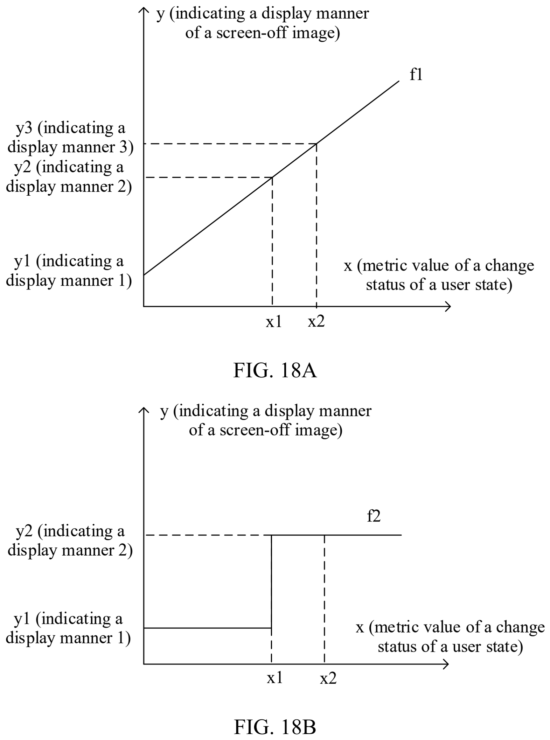

In some examples, different metric values may correspond to different display manners. For example, as shown in FIG. 18A, it is assumed that x is a metric value of the change status of the user state, y indicates a display manner of the screen-off image, and x and y may satisfy a continuous function f1. When x is 0, y is y1, that is, when the metric value is 0, the display manner of the screen-off image is a display manner 1 indicated by y1. When x is x1 (greater than 0), it may be determined, based on f1, that y corresponding to x1 is y2, that is, when the metric value is x1, the display manner of the screen-off image is a display manner 2 indicated by y2. When x is x2 (greater than 0), it may be determined, based on f1, that y corresponding to x2 is y3, that is, when the metric value is x2, the display manner of the screen-off image is a display manner 3 indicated by y3. In other words, different values of x correspond to different values of y. For example, if the first display manner is the display manner 1 indicated by y1, and the metric value in the first information is x1, the determined second display manner is the display manner 2 indicated by y2. For example, in the foregoing scenario 2, each time the electronic device 100 detects that the face of the user moves leftward, and a proportion of a displacement of the face of the user to a width of the face of the user increases by 1%, the screen-off image 411 may be controlled to rotate leftward by 5 degrees. For example, in comparison with the image 6 shown in FIG. 4A, the face of the user in the image 7 shown in FIG. 4B moves leftward, and the proportion of the displacement of the face of the user to the width of the face of the user increases by 1%. Therefore, compared with the screen-off image 411 shown in FIG. 4A, the screen-off image 411 shown in FIG. 4B rotates leftward by 5 degrees.

In some other examples, metric values in different ranges may correspond to different display manners. For example, as shown in FIG. 18B, FIG. 18B is similar to FIG. 18A, and a difference lies in that x and y in FIG. 18B satisfy a discontinuous function f2. When x is greater than or equal to 0 and less than x1, it may be determined, based on f2, that corresponding y is y1. In other words, when the metric value is greater than or equal to 0 and less than x1, the display manner of the screen-off image is the display manner 1. When x is greater than or equal to x1 (for example, x is x1 or x2), it may be determined, based on f2, that corresponding y is y2. In other words, when the metric value is greater than or equal to x1, the display manner of the screen-off image is the display manner 2. For example, if the first display manner is the display manner 1 indicated by y1, and the metric value in the first information is a value (for example, x2) greater than or equal to x1, the determined second display manner is the display manner 2 indicated by y2. For example, in the foregoing scenario 2, when the electronic device 100 detects that the face of the user moves leftward, and the proportion of the displacement of the face of the user to the width of the face of the user is less than 1/2, the screen-off image 411 shown in FIG. 4A is displayed. When the electronic device 100 detects that the face of the user moves leftward, and the proportion of the displacement of the face of the user to the width of the face of the user is greater than 1/2, the screen-off image 411 shown in FIG. 4B is displayed.

9: The processor 110 indicates the display 194 to display the first screen-off image in the second display manner.

10: The display 194 displays, in response to the instruction of the processor 110, the first screen-off image in the second display manner.

In some examples, the second event is an event that the angle of the head of the user relative to the electronic device 100 changes. For Examples 5 to 10 shown in FIG. 17, refer to the foregoing scenario 1 and scenario 3.

In some examples, the second event is an event that the position of the face of the user relative to the electronic device 100 changes. For Examples 5 to 10 shown in FIG. 17, refer to the scenario 2 and the scenario 3.

In some examples, the second event is an event that the user expression changes. For Examples 5 to 10 shown in FIG. 17, refer to the foregoing scenario 4.

In some examples, the second event is an event that the user performs a user operation. For Examples 5 to 10 shown in FIG. 17, refer to the foregoing scenario 5.

In some examples, the second event is an event that the position at which the line of sight of the user is focused changes. For Examples 5 to 10 shown in FIG. 17, refer to the foregoing scenario 6.

In some examples, the second event is an event that the appearance feature of the user changes. For Examples 5 to 10 shown in FIG. 17, refer to the descriptions in FIG. 15A and FIG. 15B.

In an implementation, after step 5 or 10 shown in FIG. 17, the method further includes: The camera 193 detects that the user does not gaze on the display 194, and reports a corresponding event to the processor 110. The processor 110 may indicate, based on the event, the display 194 to enter a screen-off state. This is not limited thereto. In some other examples, alternatively, when the optical proximity sensor 180G detects that an object approaches, the processor 110 indicates the display 194 to enter the screen-off state. An event used to trigger the display 194 to enter the screen-off state is not limited in this application. In an implementation, before entering the screen-off state, the display 194 may first display an end animation effect of the first screen-off image. A specific example is similar to that in FIG. 7, and a difference lies in that no gesture is performed in this case.

In an implementation, before step 5 shown in FIG. 17, the method further includes: The display 194 may first display a start animation effect of the first screen-off image. A specific example is similar to that in FIG. 6, and a difference lies in that no gesture is performed in this case.

In an implementation, the first screen-off image shown in FIG. 17 may be determined by the electronic device 100 in response to a selection operation for a plurality of images. For specific examples, refer to FIG. 10A and FIG. 10B. In another implementation, the first screen-off image may alternatively be generated by the electronic device 100 based on a person image of an associated account. For example, before step 5 shown in FIG. 17, the method further includes: The electronic device 100 may send a request message to a network device, to obtain a face image that is of the associated account and that is selected by the user, and generate the first screen-off image based on the face image. For a specific example, refer to FIG. 10C. In another implementation, the first screen-off image may alternatively be generated by the electronic device 100 based on an image uploaded by the user. For example, before step 5 shown in FIG. 17, the method further includes: The electronic device 100 may receive the image uploaded by the user, and generate the first screen-off image based on the image. For specific examples, refer to FIG. 11A and FIG. 11B. In another implementation, the first screen-off image may alternatively be obtained by the electronic device 100 based on an image captured via the camera. For example, the first event in step 3 shown in FIG. 17 may include a face image captured via the camera 193, and the processor 110 may generate the first screen-off image based on the face image. For specific examples, refer to FIG. 12A and FIG. 12B.

In an implementation, after step 5 shown in FIG. 17, the method further includes: The processor 110 may indicate the display 194 to switch the first screen-off image to a second screen-off image after detecting that preset duration elapses. Optionally, the function may be set by the electronic device 100 in response to a user operation. For a specific example, refer to FIG. 16.

Not limited to the implementation shown in FIG. 17, in another implementation, the processor 110 may alternatively indicate, based on another event, the display 194 to enter the AOD state. For example, when the pressure sensor 180A and/or the touch sensor 180K receive/receives a touch operation performed by the user on the display 194, a corresponding event is reported to the processor 110. The processor 110 may indicate, based on the event, the display 194 to enter the AOD state. An event used to trigger entering to the AOD state is not limited in this application.

Not limited to the implementation shown in FIG. 17, in another implementation, step 1 shown in FIG. 17 may alternatively be that the display 194 is in a screen-on state. In this case, the first event may be replaced with another event, for example, an event of receiving a touch operation performed by the user on a power button. A state of the electronic device 100 before the AOD state is not limited in this application.

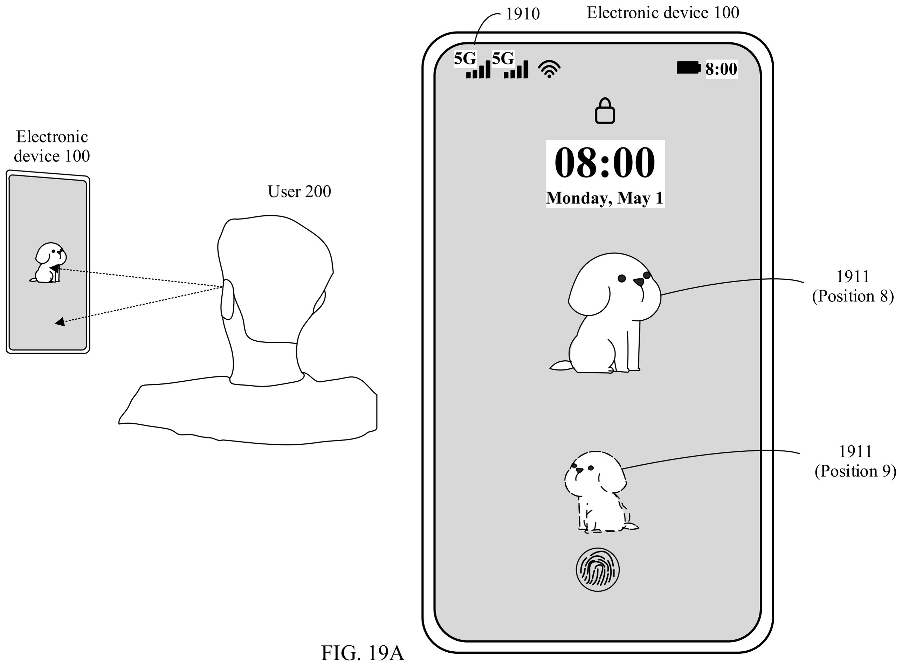

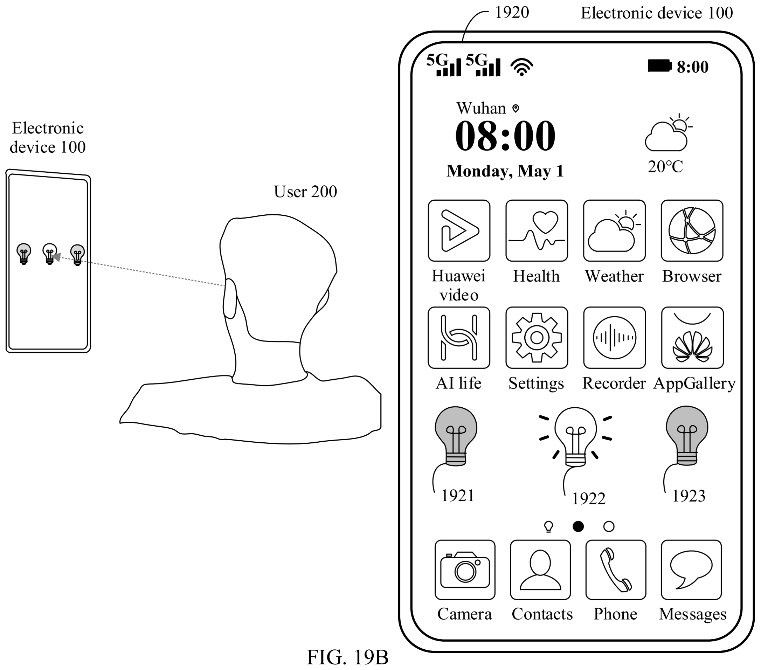

In the foregoing embodiment, an example in which an image in the AOD interface changes with the user state is used for description. This is not limited thereto. In some other embodiments, for example, an example shown in FIG. 19A, an image in a lock screen may alternatively change with the user state. In some other embodiments, for example, an example shown in FIG. 19B, an image in a home screen may alternatively change with the user state. FIG. 19A and FIG. 19B are illustrated by using an example in which a status of an image is controlled based on a position at which a line of sight of a user is focused.

FIG. 19A is an example of a diagram of a lock screen.

As shown in FIG. 19A, the electronic device 100 may display a user interface 1910. The user interface 1910 may be a lock screen. The user interface 1910 may include a status bar (for example, including an indicator of cellular communication, an indicator of a WLAN, and a battery level) located on the top, date information, time information, a fingerprint collection area, and the like. The user interface 1910 may further include an image 1911. The image 1911 may be a wallpaper image of the lock screen, or the image 1911 may be a puppy with a cartoon image. When the electronic device 100 detects that a line of sight of the user 200 is focused on a position 8 in the user interface 1910, the electronic device 100 may display the image 1911 at the position 8, for example, display an "entry" animation of the image 1911. The "entry" animation may include that the puppy shown in the image 1911 switches from a non-display state to a display state while gradually increasing in size. The image 1911 at the position 8 shown in FIG. 19A may be a display image when the "entry" animation is completed. When the electronic device 100 detects that the position at which the line of sight of the user 200 is focused changes to a position 9 in the user interface 1910, the electronic device 100 may display the image 1911 at the position 9, for example, display an "exit" animation of the image 1911. The "exit" animation may include that the puppy shown in the image 1911 gradually becomes smaller until the puppy is not displayed. The image 1911 at the position 9 shown in FIG. 19A may be a display image when the "exit" animation is performed (gradually becoming smaller). Therefore, the image 1911 at the position 9 shown in FIG. 19A is less than the image 1911 at the position 8 shown in FIG. 19A.

FIG. 19B is an example of a diagram of a home screen.

As shown in FIG. 19B, the electronic device 100 may display a user interface 1920. The user interface 1920 may be a home screen. The user interface 1920 may include a status bar (for example, including an indicator of cellular communication, an indicator of a WLAN, and a battery level) located on the top, date information, time information, icons of a plurality of applications, and the like. The user interface 1920 may further include an image 1921, an image 1922, and an image 1923. These images may be wallpaper images of the home screen, and these images may be light bulbs. For any one of the images, when the electronic device 100 fails to detect that a line of sight of the user 200 is focused on the image, the image may be in a screen-off state (for example, low brightness and a dark color). When the electronic device 100 detects that the line of sight of the user 200 is focused on the image, the image may be in a screen-on state (for example, high brightness and a light color). For example, in FIG. 19B, an example in which the electronic device 100 detects that the line of sight of the user 200 is focused on the image 1922 is used for illustration. In this case, in the user interface 1920 shown in FIG. 19B, the image 1922 is in the screen-on state, and the image 1921 and the image 1923 are in the screen-off state. In some examples, the image 1921, the image 1922, and the image 1923 may be in different screen-on states, for example, have different brightness and different colors. For example, when the electronic device 100 detects that the line of sight of the user 200 is focused on the image 1922, the image 1922 may be in a red screen-on state. When the electronic device 100 detects that the line of sight of the user 200 is focused on the image 1921/image 1923, the image 1921/image 1923 may be in a blue screen-on state.

All or some of the methods provided in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DWD)), a semiconductor medium (for example, a solid state disk (solid state disk, SSD)), or the like. In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A display method, applied to an electronic device, wherein the electronic device comprises a display, and the method comprises:
displaying a first interface, wherein the first interface comprises a first image in a first display manner;
detecting that a state of a first user changes from a first state to a second state, wherein the state of the first user comprises at least one of the following: an angle of a head of the user relative to the electronic device, a position of a face of the user relative to the electronic device, a gesture action, a facial expression, a position at which a line of sight is focused on the display, and an appearance feature; and
updating a display manner of the first image to a second display manner, wherein the first display manner is related to the first state, and the second display manner is related to the second state.

2. The method according to claim 1, wherein the first image comprises a first virtual object, and the first virtual object is a virtual person, a virtual animal, or a virtual entity.

3. The method according to claim 2, wherein the first image comprises at least one piece of image content, the at least one piece of image content comprises image content of the first virtual object, and the display manner of the first image comprises at least one of the following: a position of the image content, a size of the image content, whether the image content is in a hidden state, a color of the image content, a shape of the image content, brightness of the image content, an expression of the first virtual object, a gesture action of the first virtual object, and an appearance feature of the first virtual object.

4. The method according to claim 2 or 3, wherein detecting that the state of the first user changes from the first state to the second state comprises:
when the head of the first user rotates relative to the electronic device in a first direction, or the electronic device rotates relative to the first user in a second direction, detecting that the angle of the head of the first user relative to the electronic device changes from a first angle to a second angle, wherein the first direction is opposite to the second direction; and
updating the display manner of the first image to the second display manner comprises:
updating the first virtual object or a first part of the first virtual object from a first position to a second position, wherein the first position is related to the first angle, the second position is related to the second angle, and the second position is located in the first direction of the first position.

5. The method according to claim 2 or 3, wherein detecting that the state of the first user changes from the first state to the second state comprises:
when the face of the first user translates relative to the electronic device in a third direction, or the electronic device translates relative to the first user in a fourth direction, detecting that the position of the face of the first user relative to the electronic device changes from a third position to a fourth position, wherein the third direction is opposite to the fourth direction, and the fourth position is located in the third direction of the third position; and
updating the display manner of the first image to the second display manner comprises:
updating the first virtual object or a first part of the first virtual object from a fifth position to a sixth position, wherein the fifth position is related to the third position, the sixth position is related to the fourth position, and the sixth position is located in the third direction of the fifth position.

6. The method according to claim 2 or 3, wherein detecting that the state of the first user changes from the first state to the second state comprises:
detecting that an expression of the first user changes from a first expression to a second expression, wherein
an expression of the first virtual object in the first image in the first display manner is the first expression, and an expression of the first virtual object in the first image in the second display manner is the second expression.

7. The method according to claim 2 or 3, wherein the second state comprises that the gesture action of the first user is a first gesture, the first virtual object in the first image in the first display manner is in a hidden state, and the first virtual object in the first image in the second display manner is in a display state; or the first virtual object in the first image in the first display manner is in a display state, and the first virtual object in the first image in the second display manner is in a hidden state.

8. The method according to claim 2 or 3, wherein detecting that the state of the first user changes from the first state to the second state comprises:
detecting that the position at which the line of sight of the first user is focused on the display changes from a seventh position to an eighth position, wherein
the first virtual object in the first image in the first display manner is located at the seventh position, and the first virtual object in the first image in the second display manner is located at the eighth position.

9. The method according to claim 2 or 3, wherein the first state comprises a ninth position at which the line of sight of the first user is focused on the display, the second state comprises a tenth position at which the line of sight of the first user is focused on the display, the first virtual object in the first image is located at the tenth position, a display state of the first virtual object in the first image in the first display manner is different from a display state of the first virtual object in the first image in the second display manner, and the display state comprises at least one of the following: a size, a color, a shape, and brightness.

10. The method according to claim 2 or 3, wherein detecting that the state of the first user changes from the first state to the second state comprises:
detecting that the position at which the line of sight of the first user is focused moves in a fifth direction; and
updating the display manner of the first image to the second display manner comprises:
updating the first virtual object or a first part of the first virtual object from an eleventh position to a twelfth position, wherein the twelfth position is located in the fifth direction of the eleventh position.

11. The method according to claim 2 or 3, wherein the first state comprises that the appearance feature of the first user is a first feature; the second state comprises that the appearance feature of the first user is a second feature; and an appearance feature of the first virtual object in the first image in the first display manner matches the first feature, an appearance feature of the first virtual object in the first image in the second display manner matches the second feature, and the appearance feature comprises at least one of the following: clothing, an accessory, a hairstyle, and a facial feature.

12. The method according to any one of claims 1 to 11, wherein before displaying the first interface, the method further comprises:
displaying a first setting interface, wherein the first setting interface comprises a plurality of images; and
receiving a first operation for the first image in the plurality of images.

13. The method according to any one of claims 1 to 11, wherein before displaying the first interface, the method further comprises:
sending a first request message to a network device, wherein the first request message comprises information about a first account associated with the electronic device;
receiving a second image sent by the network device, wherein the second image is an image of a second user of the first account; and
obtaining the first image based on the second image, wherein the first virtual object in the first image is a virtual person, and the first virtual object is obtained based on the second user in the second image.

14. The method according to any one of claims 1 to 11, wherein before displaying the first interface, the method further comprises:
receiving a third image uploaded by the first user; and
obtaining the first image based on the third image, wherein
the third image is the same as the first image; or
the first virtual object in the first image is obtained based on an object in the third image.

15. The method according to any one of claims 1 to 11, wherein before displaying the first interface, the method further comprises:
capturing a fourth image via a camera of the electronic device; and
obtaining the first image based on the fourth image, wherein the first virtual object in the first image is obtained based on an object in the fourth image.

16. The method according to claim 13, wherein the second image is an image of the second user at first time, an appearance feature of the second user in the second image is a third feature, and the appearance feature of the first virtual object in the first image in the first display manner matches the third feature; and after displaying the first interface, the method further comprises:
sending a second request message to the network device; and
receiving a fifth image sent by the network device, wherein the fifth image is an image of the second user at second time, the second time is later than the first time, and an appearance feature of the second user in the fifth image is a fourth feature; and
updating the display manner of the first image to a third display manner, wherein an appearance feature of the first virtual object in the first image in the third display manner matches the fourth feature.

17. The method according to any one of claims 1 to 16, wherein updating the display manner of the first image to the second display manner comprises:
when the first image is an animation, switching a current playing point of the first image from a first point to a second point; or
when the first image is an image comprising a plurality of layers, adjusting a display manner of at least one layer in the first image.

18. The method according to any one of claims 1 to 17, wherein the method further comprises:
after displaying the first interface, controlling the display to be turned off when it is detected that the first user does not gaze on the display; or
displaying the first interface when it is detected that the first user gazes on the display.

19. The method according to any one of claims 1 to 17, wherein the method further comprises:
after displaying the first interface, controlling the display to be turned off when it is detected that an object approaches the electronic device; and
displaying the first interface when it is detected that the object leaves the electronic device.

20. The method according to any one of claims 1 to 19, wherein the method further comprises:
displaying a second setting interface, wherein the second setting interface is used to preview the first interface, and the second setting interface comprises the first image in the first display manner;
detecting that the state of the first user changes from the first state to the second state; and
updating the display manner of the first image to the second display manner.

21. The method according to claim 20, wherein displaying the second setting interface comprises:
receiving a second operation when displaying the first interface; and
displaying the second setting interface in response to the second operation.

22. The method according to any one of claims 1 to 21, wherein the method further comprises:
displaying a second interface when first duration elapses after the first interface is displayed, wherein the second interface comprises a sixth image, and the sixth image is different from the first image.

23. The method according to any one of claims 1 to 21, wherein the first interface is an always on display AOD interface, or the first interface is a lock screen, or the first interface is a home screen.

24. An electronic device, comprising a transceiver, a processor, and a memory, wherein the memory is configured to store a computer program, and the processor invokes the computer program to perform the method according to any one of claims 1 to 23.

25. A computer storage medium, wherein the computer storage medium stores a computer program, and when the computer program is executed by a processor, the method according to any one of claims 1 to 23 is implemented.
